# EUROPÄISCHE PATENTSCHRIFT

(11) **EP 0 562 166 B1**
(45) Veröffentlichungstag und Bekanntmachung des Hinweises auf die Patenterteilung: **04.12.1996**
(21) Anmeldenummer: 92119781.0
(22) Anmeldetag: 20.11.1992
(51) Int. Cl.: B32B 27/08, B32B 7/12, A47B 13/08

(54) **Kantenband aus Kunststoff, Verfahren zu dessen Herstellung und Verwendung**
Edge band made of polymers, its method of production and use
Bande de lisière en résine polymérique, méthode de sa fabrication et son utilisation

(30) Priorität: 20.03.1992 DE 4208991
(43) Veröffentlichungstag der Anmeldung: 29.09.1993
(73) Patentinhaber: ALKOR GMBH KUNSTSTOFFE, D-81451 München (DE)
(72) Erfinder: Schneider, Manfred, W-8911 Hagenheim (DE); Altmann, Heinz, W-8035 Gauting (DE)

(56) Entgegenhaltungen:
- EP-A- 0 213 441
- EP-A- 0 256 275
- EP-A- 0 263 964
- DE-A- 2 730 899
- DE-A- 3 742 008
- "Handbook of Plastic Materials and Technology" I.Rubin, Seiten 1721 bis 1725, Tabellen 19 bis 22

## Beschreibung

Die vorliegende Erfindung betrifft ein geprägtes und/oder bedrucktes Kantenband (Umleimer) aus Kunststoff, das Füllstoffe und/oder Pigmente enthält, ein Verfahren zur Herstellung und die Verwendung desselben. Gemäß der Erfindung besteht das Kantenband aus einer mindestens zweischichtigen, papierschichtenfreien Kunststoffbahn oder einer mindestens zweischichtigen papierschichtenfreien Endlosplatte von jeweils ganz bestimmter Zusammensetzung mit einer Materialdicke von 400 bis 4000 µm und ist in Streifen von 12 bis 200 mm geschnitten, wobei das Kantenband mindestens zwei durch Coextrusion, Mehrfachextrusion oder Lamination hergestellte Schichten besitzt und eine ganz bestimmte Zusammensetzung auch der einzelnen Schichten aufweist.

Aus der EP-A-0213441 sind bereits Möbelfolien auf der Basis von Polyolefinen bekannt. Verwendet man diese als Kantenband, so genügen sie leider nicht den gestellten Ansprüchen. Die Haftung für die Kanten ist nicht gut, die Folie ist für die Kanten zu spröde und wird bei Stoß, Druck und dgl. zu leicht beschädigt. Wasser und andere Einflüsse führen zu leicht zur teilweisen oder vollständigen Abtrennung des Kantenbandes.

Aus der Literaturstelle 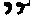 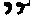 Handbook of Plastic Materials and Technology" von J. Rubin, Seiten 1721 bis 1725, Tabellen 19 bis 22, sind unter anderem die Zugfestigkeiten und Elastizitätsmodule der unterschiedlichsten Kuntstoffe bekannt.

Rollbare Kantenumleimer aus Papier und Kunststoff zur Oberflächenveredelung von Möbelkanten und Platten aller Art sind bereits aus dem GM 75 26 366 bekannt. Diese Kantenumleimer werden in Form von ca. 1 bis 3 cm breiten Streifen mit einer Stärke von 0,2 bis 1 mm aus Papier hergestellt, das mit Kunstharz (Melaminharz, Alkydharz, Polyurethan, Harnstoff-Formaldehydharz oder vernetzbaren Acrylatharz) imprägniert ist. Diese mit Kunstharz imprägnierten Kantenumleimer auf Papierbasis haben den Nachteil, daß sie mechanisch nicht sehr stabil und leicht beschädigbar sind. Weiterhin ist die Haftfähigkeit dieser rollbaren Kantenumleimer auf Holz und Holzwerkstoffen verbesserungsbedürftig und z. B. bei Feuchtigkeit wenig haltbar.

Ziel und Aufgabe der vorliegenden Erfindung war es, diese Nachteile zu vermeiden und ein verbessertes Kantenband zu finden. Das Kantenband sollte insbesondere eine verbesserte mechanische Stabilität besitzen und unter Verwendung von Klebstoff eine verbesserte Haftfestigkeit auch bei späteren Einwirkungen von Feuchtigkeit aufweisen. Falls gewünscht, sollte das Kantenband auch gut bedruckbar oder prägbar sein.

Erfindungsgemäß wurde festgestellt, daß diesen Zielen und Aufgaben ein geprägtes und/oder bedrucktes Kantenband (Umleimer) aus Kunststoff, das Pigmente und/oder Füllstoffe enthält, eine Polyolefinschicht oder Polyolefinfolie oder polyolefinhaltige Schicht oder Folie ist und ein Propylenhomo- und/oder -copolymerisat und/oder ein Ethylen hoher Dichte (HDPE) enthält oder daraus besteht und mindestens eine unmittelbar darunter oder über eine oder mehrere Zwischenschichten angeordnete Haftvermittlerschicht (11) besitzt, gerecht wird. Gemäß der Erfindung enthält mindestens eine Polyolefinschicht oder Polyolefinfolie als Zwischenschicht oder obere Schicht (12, 12') eine Mischung oder Legierung von einem Propylenhomo- oder -copolymiersat und einem HDPE und/oder LLDPE mit einem Gewichtsverhältnis des Propylenhomo- oder -copolymerisates (mit einem Comonomeranteil von weniger als 50 Gew.-%) zu dem HDPE und/oder LLDPE von 40 : 60 bis 60 : 40 sowie mindestens einem Stabilisator, Gleitmittel, Pigment und/oder Farbstoff oder besteht daraus. Weiterhin ist eine nicht selbstklebende, lösemittelfreie coextrudierte Haftfolie an der Unterseite des Kantenbandes angeordnet, die einen polaren Gruppen enthaltenden wasserschwer- oder wasserunlöslichen Kunststoff in Form eines Co-, Ter- und/oder Pfropfpolymerisates oder einer Legierung oder Mischung enthält oder daraus besteht. Das Kantenband besteht aus der mindestens zweischichtigen papierschichtenfreien Kunststoffbahn oder der mindestens zweischichtigen papierschichtenfreien Endlosplatte, weist eine Materialdicke von 400 bis 4000 µm auf und ist in Streifen von 12 bis 200 mm geschnitten.

Der wasserschwer- oder wasserunlösliche Kunststoff in Form eines Co-, Ter- und/oder Pfropfpolymerisates oder einer Legierung oder Mischung der Haftfolie oder Haftvermittlerschicht enthält vorzugsweise mindestens ein Ethylen-Vinylacetat-Co- und/oder -Terpolymerisat, ein Ethylen-Acrylsäureester- oder Ethylen-Acrylsäure-Co- oder Terpolymerisat, ein Ethylen-Methacrylsäureester- oder Ethylen-Methacrylsäure-Co- oder Terpolymerisat, ein Maleinsäure oder Maleinsäureanhydrid enthaltendes Polymerisat, -Co- oder Terpolymerisat und/oder ein Paratoluolsulfonsäure oder Sulfonsäuregruppen enthaltendes Polymerisat, -Co- oder -Terpolymerisat, oder besteht (gegebenenfalls neben Verarbeitungshilfs- und/oder Zusatzmitteln) daraus.

Die Polyolefinschicht oder polyolefinhaltige Folie (12) enthält somit als Kunststoff nach einer bevorzugten Ausführungsform HDPE und mindestens ein Zusatz- oder Verarbeitungshilfsmittel, vorzugsweise mindestens einen Stabilisator und/oder Gleitmittel, und/oder mindestens ein Pigment, Farbstoff und/oder Füllstoff oder besteht (bezogen auf den Kunststoffanteil) daraus.

Nach einer anderen bevorzugten Ausführungsform der Erfindung enthält die Polyolefinschicht oder polyolefinhaltige Folie (12) ein Propylenhomo- und/oder -copolymerisat oder ein Gemisch von einem Propylenhomo- und/oder copolymerisat mit HDPE und/oder LLDPE oder das Kunststoffbindemittel der Schicht oder Folie (12) besteht daraus. Das erfindungsgemäße Kantenband, das mindestens die Schichten oder Folien (11) und (12) besitzt wird auf die zu beschichtenden Holz- oder Holzwerkstoffkanten zur Herstellung von Möbeln oder Möbelteilen unter Verwendung eines Schmelzklebers aufgebracht. Der Schmelzkleber wird auf die Holz- oder Werkstoffkanten aufgetragen, vorzugsweise bei Temperaturen von 120 bis 245 °C, vorzugsweise 140 bis 220 °C, aufgetragen bzw. aufgebracht. Das in Streifen geschnittene, gefräste, gesägte oder in ähnlicher Weise auf eine Streifenbreite von 12 bis 200 mm, vorzugsweise 15 bis 100 mm geschnittene oder geteilte Kantenband wird unter Druck, vorzugsweise unter Rollen- oder Walzendruck auf die heiße Schmelzkleberschicht aufgedrückt. Die an den Kanten, Ecken oder ähnlichen Abschlußrändern überstehenden Ränder werden abgeschnitten, abgefräst, abgesägt oder in ähnlicher Weise abgetrennt. Das wird bevorzugt bei Normaltemperatur auf den noch heißen Schmelzkleber, der sich auf den Holzwerkstoffkanten oder Holzkanten befindet, aufgedruckt oder mit der erhitzten Schmelzklebeschicht aufgebracht. Die so hergestellten unter Verwendung des erfindungsgemäßen Kantenbandes, Möbelkanten oder Möbelteilkanten sind nicht wasserdampfempfindlich und weisen auch bei Lagerung im feuchten Zustand keine Ablöseerscheinungen auf. Unter Verwendung des erfindungsgemäßen Kantenbandes ist es auch nicht erforderlich, duroplastische Klebemittel einzusetzen.

Das Kantenband aus Kunststoff gemäß der Erfindung wird unverstreckt aufgebracht, so daß evtl. Reck- oder zusätzliche Streckverfahren nicht durchgeführt werden müssen und auch nicht für die Erfindung erwünscht sind.

Nach einer weiteren bevorzugten Ausführungsform der Erfindung enthält mindestens eine Polyolefinschicht oder Polyolefinfolie als Zwischenschicht (12') oder obere Schicht (12) eine Mischung oder Legierung von einem Propylenhomo- oder -copolymerisat (mit einem Comonomeranteil, vorzugsweise Ethylenanteil von weniger als 25 Gew.-%) (bezogen auf 100 Gewichtsteile Propylencopolymerisat), und einem HDPE und/oder LLDPE mit einem Gewichtsverhältnis des Propylenhomo- oder -copolymerisates zu dem HDPE und/oder LLDPE von 40 : 60 bis 60 : 40, sowie mindestens ein Verarbeitungshilfsmittel oder -zusatzmittel, vorzugsweise mindestens einen Stabilisator und/oder Gleitmittel, und/oder mindestens ein Pigment, Farbstoff und/oder feinteiligen Füllstoff oder besteht daraus.

Das erfindungsgemäße Kantenband ist gegenüber Feuchtigkeit und sogar Wasserdampf weitgehend beständig. Darüberhinaus ist es mechanisch sehr stabil und relativ widerstandsfähig gegenüber Belastungen oder mechanische Einwirkungen. Das Kantenband, das ungereckt ist, ist gut bedruckbar und/oder prägbar, zusätzliche spezielle Haftvermittler bei der Aufbringung sind nicht erforderlich.

Nach einer weiteren bevorzugten Ausführungsform der Erfindung ist oberhalb der Zwischenschicht oder Zwischenfolie (12'), Propylenhomo- oder -copolymerisat (mit einem Comonomeranteil unter 15 Gew.-%) und HDPE oder LLDPE als Bindemittel enthält oder daraus besteht, eine füllstoffhaltige Polyolefinschicht oder -folie (13) angeordnet, die eine Mischung oder Legierung von 30 bis 70 Gew.-%, vorzugsweise 40 bis 60 Gew.-%, Ethylenhomo- und/oder -copolymerisat (mit einem Comonomranteil unter 15 Gew.-% (bezogen auf 100 Gew.-Teile Ethylencopolymerisat) und 70 bis 30 Gew.-%, vorzugsweise 60 bis 40 Gew.-%, Propylenhomo- und/oder -copolymerisat (mit einem Comonomeranteil untr 15 Gew.-% (bezogen auf 100 Gewichtsteile Propylencopolymerisat) als Bindemittel enthält oder daraus besteht.

Nach einer weiteren bevorzugten Ausführungsform ist oberhalb der Zwischenschicht oder Zwischenfolie (12'), die Propylenhomo- oder -copolymerisat (mit einem Comonomeranteil unter 15 Gew.-%) und HDPE oder LLDPE als Bindemittel enthält oder daraus besteht, eine weitere Polyolefinschicht oder -folie (13) angeordnet, die aus einem Gemisch von
70 bis 97,5 Gewichtsteilen, vorzugsweise 75 bis 85 Gewichtsteilen,
eines Propylenhomo- oder -copolymerisates,
5 bis 30 Gewichtsteilen, vorzugsweise 15 bis 25 Gewichtsteilen,
HDPE, das bezogen auf 100 Gewichtsteile HDPE durch
0 bis 35 Gew.-%, vorzugsweise 0 bis 10 Gew.-%,
bezogen auf 100 Gewichtsteile eingesetztem HDPE durch Polyvinylalkohol, Ethylen-Vinyalalkohol-Mischpolymerisat, Ethylen-Acrylsäure-Mischpolymerisat, Acrylsäureester-Acrylsäure-Terpolymerisat und/oder Polycaprolacton ersetzt ist, und
50 bis 150 Gew.-%, vorzugsweise 70 bis 120 Gew.-%,
bezogen auf 100 Gewichtsteile Kunststoffbindemittel eines feinteiligen Füllstoffes besteht oder diese Bestandteile enthält, sowie gegebenenfalls Verarbeitungshilfsmittel, Farbpigmente und/oder Modifizierungsmittel enthält.

Diese Ausführungsform weist neben den vorgenannten Vorteilen noch den zusätzlichen Vorteil auf, daß das Kantenband noch bessere Verarbeitungseigenschaften besitzt, sowie haftfester, gut bedruckbar und/oder prägbar ist.

Nach einer weiteren bevorzugten Ausführungsform sind mehr als 60 Gew.-%, vorzugsweise mehr als 75 Gew.-%, des in der Polyolefinschicht oder -folie (13) und/oder in der Zwischenschicht oder Zwischenfolie (12') oder oberen Schicht (12) eingesetzten Füllstoffes mit einem Oberflächenbehandlungsmittel und/oder einer reaktiven Substanz in einer Gewichtsmenge von 0,05 bis 10 Gew.-% (bezogen auf 100 Gewichtsteile Füllstoff), auf der Oberfläche behandelt und/oder beschichtet. Der mittlere Körnungsdurchmesser des Füllstoffes oder Füllstoffgemisches beträgt dabei 0,01 bis 30 µm, vorzugsweise 0,1 bis 10 µm.

Unter Verwendung dieser Ausführungsformen lassen sich Kantenbänder mit einer hohen Oberflächenspannung und einer guten Bedruckbarkeit und/oder Prägbarkeit erzielen sowie einer ausreichenden Lagerzeit, innerhalb der die Oberflächenspannung nicht oder nur unwesentlich abnimmt. Im Rahmen der Erfindung gelingt es auch, falls erwünscht, das Kantenband mit der gleichen Bedruckung oder dem gleichen Oberflächendekor und/oder der gleichen Narbung zu versehen, wie die der zur Oberflächenbeschichtung verwendeten Kunststoffolie oder Kunststoffolienbahn, die vorzugsweise aus Polyolefin besteht oder dieses enthält.

Das Kantenband gemäß der Erfindung weist auf seiner Oberfläche eine Oberflächenspannung von mehr als 68 mN/m (milli Newton/Meter bzw. dyn/cm), vorzugsweise von mehr als 71 mN/m (milli Newton/Meter bzw. dyn/cm), auf und/oder ist coronabehandelt oder durch ein Plasmaverfahren vorbehandelt, wobei die vorgenannten Werte der Oberflächenspannung eingestellt werden.

Gemäß einer bevorzugten Ausführungsform sind 0,1 bis 20 Gew.-Teile, vorzugsweise 1 bis 10 Gew.-Teile, des mit einer polaren Substanz versehenen Füllstoffes oder Füllstoffgemisches durch die gleiche Gewichtsmenge eines polaren Füllstoffes oder polaren Füllstoffgemisches, vorzugsweise ungecoatetes Kaolin und/oder Kieselsäuregel, ersetzt. Dadurch können je nach eingesetztem polaren Füllstoff höhere Oberflächenspannungen erzielt werden.

Als polare Substanz bzw. Substanzen ist bzw. sind mindestens eine organischchemische Verbindung mit mindestens einer OH-Gruppe und/oder CO-OH-Gruppe und/oder Si0- oder SiOR-Gruppen oder ähnliche Polysiloxangruppen und mindestens einer oder mehreren unpolaren Gruppen an der Oberfläche des mineralischen Füllstoffes enthalten und/oder dieser ist damit in Form einer dünnen Schicht ganz oder teilweise überzogen, wobei vorzugsweise die polaren Gruppen zum Füllstoff orientiert sind oder ganz oder teilweise eine Reaktion mit diesem eingegangen sind.

Bevorzugt werden als polare und unpolare Gruppen aufweisende Verbindungen gesättigte und ungesättigte Carbonsäuren mit einer C-Zahl über 3, vorzugsweise über 10, Hydroxycarbonsäure, Polyoxycarbonsäuren mit einer C-Zahl über C₆, vorzugsweise über C₁₀ und/oder Fettsäuren, insbesondere Stearinsäure, Hydroxystearinsäure und Polysiloxane (z.B. Polydimethylsiloxan) oder Hydroxy- oder Amin-Gruppen aufweisende Polysiloxane oder eine oder mehrere Hydroxygruppen enthaltende Polysiloxane eingesetzt.

Wichtig ist, daß die polare und unpolare Gruppen aufweisenden Verbindungen nicht getrennt bei der Folienherstellung zugegeben werden, sondern mit dem Füllstoff oder dem Füllstoffgemisch, wobei sie auf der Oberfläche oder einem Teil der Oberfläche des Füllstoffes angeordnet sein sollten oder müssen. Setzt man die polaren und unpolaren Gruppen aufweisenden Verbindungen getrennt bei der Folienherstellung zu, ohne daß sie auf der Oberfläche des Füllstoffes angeordnet sind, so besteht die Gefahr des Auftretens von Verarbeitungsschwierigkeiten oder der Herstellung von Folien verschlechteter Qualität.

Nach einer anderen Ausführungsform kann das Kantenband außerdem noch ein oder mehrere organische Modifizierungsmittel enthalten. Diese dienen zur Regelung von Zähigkeit, Kalandrierbarkeit, Extrudierbarkeit und ähnlichen Eigenschaften. Eine bevorzugte Gruppe hierfür sind Blockpolymere von Styrol mit Butadien oder Isobutylen oder Isopren. Andere geeignete Modifizierungsmittel sind Polymerisate auf Basis Styrol-Butadien, Methacrylat-Butadien-Styrol. Polyolefine, die fünktionelle Gruppen enthalten, eignen sich besonders zur Beeinflussung des Verhältnisses von physikalischen Eigenschaften zur Verklebbarkeit. Derartige Modifizierungszusätze sind zweckmäßig in einer Menge von 0,5 bis 20 Gew.-Teilen, vorzugsweise von 2 bis 10 Gew.-Teilen, vorhanden.

Wie bereits erwähnt, kommen die Vorteile der erfindungsgemäßen Folie bzw. des Kantenbandes dann besser zur Geltung, wenn sie einer die Oberflächenadhäsion verbessernden Behandlung unterworfen wird. Bevorzugt besteht diese Oberflächenbehandlung in Form einer Aktivierung durch Bestrahlung. Unter den Bestrahlungsmethoden wird wiederum eine Corona-Behandlung bevorzugt. Jedoch können auch andere Bestrahlungsmethoden angewendet wrden.

Beispiele für andere geeignete Bestrahlungsmethoden sind Elektronenbestrahlung, UV-Bestrahlung und/oder Laserbestrahlung. Auch hier sind geeignete Vorrichtungen bekannt.

Nach einer anderen bevorzugten Ausführungsform ist oberhalb der Zwischenschicht oder Zwischenfolie (12'), die Propylenhomo- oder Propylencopolymrisat (mit einem Comonomeranteil unter 15 Gew.-%) und HDPE oder LLDPE als Bindemittel enthält oder daraus besteht, eine weitere Polyolefinschicht oder -folie (13) angeordnet, die Polypropylen und/oder Polyethylen, vorzugsweise HDPE, als Kunststoff enthält oder daraus besteht sowie 0,5 bis 55 Gew.-%, vorzugsweise 3 bis 35 Gew.-%, eines organischen Füllstoffes oder Füllstoffgemisches, vorzugsweise Cellulose mit einem mittleren Teilchendurchmesser von 5 bis 100 µm, vorzugsweise 7 bis 50 µm, und einer größten mittleren Länge bis 250 µm, vorzugsweise bis 200 µm, und/oder Stärke (bezogen auf die Summe von Polyolefin und organischen Füllstoff) sowie gegebenenfalls Verarbeitungshilfsmittel, Farbpigmente, Farbstoffe und/oder Modifizierungsmittel enthält oder daraus besteht. Diese Ausführungsform hat den Vorteil, einer späteren leichteren bzw. besseren Abfallverwertung bzw. Abfallzersetzung, einer permanenten Haftung für Lakke, Druckfarben und einer guten mechanischen Beständigkeit.

Im Rahmen der Erfindung (oder zuletzt genannten Ausführungsform) geeignet sind feinteilige Cellulose, hergestellt nach dem Sulfit- oder Sulfatverfahren, die bevorzugt wird, sowie native oder regenerierte Cellulose.

Die Cellulosemenge liegt nach einer Ausführungsform zwischen 3 und 50 Gew.-%, bezogen auf die Summe von Polyolefin und Cellulose. Wird ein Gehalt von 50 Gew.-% überschritten, so werden die Festigkeitseigenschaften drastisch verschlechtert.

Der Feinheitsgrad der Cellulose in dem erfindungsgemäßen Kantenband liegt zweckmäßig zwischen 1 und 100 µm bei einer Faserdicke von 10 bis 30 µm. Ein feinerer Verteilungsgrad ist zu aufwendig, bei größeren Partikeln treten Probleme bei der Herstellung glatter, dünner Folien auf. Bei nativer und regenerierter Cellulose können jedoch auch Teilchen bis zu 100 µm dick einer größten mittleren Länge von 200 µm verwendet werden, ohne daß hinsichtlich der Folienbildung grundsätzliche Schwierigkeiten auftreten. Als Stärke können die an sich bekannten Stärkesorten` vorzugsweise Kartoffelstärke und/oder Maisstärke, verwendet werden.

Nach einer anderen Ausführungsform kann das Kantenband zusätzlich auch mineralische Füllstoffe enthalten. Derartige Füllstoffe für Polymerfolien sind bekannt. Besonders geeignet und daher bevorzugt werden Glimmer, Talkum, Silikate und Kieselsäuren in ihren verschiedenen Formen. Beispiele für andere brauchbare mineralische Füllstoffe sind Carbonate, insbesondere Calciumcarbonate, wie Kalkstein und Kreide, sowie Magnesiumcarbonate und dergleichen.

Durch den Zusatz geeigneter mineralischer Füllstoffe lassen sich Eigenschaften, wie Vicatpunkt, Shorehärte und Zugfestigkeit beeinflussen. Falls derartige mineralische Füllstoffe vorhanden sind, enthält die Folie zweckmäßig 3 bis 50 Gew.-%, vorzugsweise 3 bis 30 Gew.-%, bezogen auf die Summe von Polyolefin und Cellulose.

Außerdem kann das Kantenband noch ein oder mehrere organische Modifizierungsmittel enthalten. Diese dienen zur Regelung von Zähigkeit, Kalandrierbarkeit, Extrudierbarkeit und ähnliche Eigenschaften. Eine bevorzugte Gruppe hierfür sind Blockpolymere von Styrol mit Elastomeren, z. B. mit Butadien oder Isobutylen oder Isopren. Andere geeingnete Modifizierungsmittel sind Copolymerisate auf Basis Styrol-Butadien, Methacrylat-Butadien-Styrol. Polyolefine, die funktionelle Gruppen enthalten, z. B. Copolymerisate, Terpolymerisate oder Pfropfcopolymerisate von Ethylen und reaktiven Monomeren, eignen sich besonders zur Beeinflussung von speziellen physikalischen Eigenschaften und der Verklebbarkeit. Derartige Modifizierungszusätze sind zweckmäßig in einer Menge von 0,5 bis 20 Gew.-%, vorzugsweise von 2 bis 10 Gew.-%, bezogen jeweils auf die Summe von Polyolefin und Cellulose, vorhanden.

Im allgemeinen wird nach einer vorzugsweisen Ausführungsform die Oberflächenaktivierung durch Bestrahlung oder durch Behandlung mit einer Flamme oder Ozon durchgeführt. Besonders bevorzugt wird die Corona-Behandlung, andere Bestrahlungsmethoden verwenden Elektronenstrahlen, UV-Strahlen oder Laserstrahlen.

Durch die Erfindung wird, wie bereits erwähnt, die Oberflächenadhäsion von polethylenhaltigen Kantenbändern wesentlich gesteigert und dadurch der Einsatz derartiger Folien zum Kaschieren, Bedrucken, Lackieren und Verkleben, insbesondere bei den modernen Anlagen, welche kurze Prozeßzeiten und möglichst hohe Temperaturen anwenden, wesentlich verbessert oder überhaupt erst ermöglicht. Bei Verklebungen der erfindungsgemäßen Folie bzw. des Kantenbandes ergab sich auch nach Monaten noch keine Veränderung der Haftung. Die Widerstandsfähigkeit der Oberflächenaktivierung gegenüber Temperatureinfluß wird ebenfalls erheblich verbessert.

Druckfarben, beispielsweise solche auf Basis von Terpolymeren aus Vinylchlorid-Vinylacetat-Maleinsäure von OH-Gruppen enthaltenden Vinylpolymeren, aber auch die üblichen PE-Druckfarben, weisen ebenso gute Haftung auf wie Reaktionslacke, beispielsweise auf Basis Polyurethan, Melaminharzen, sowie auch UV-härtende Polyester-Epoxid und Polyurethanacrylate. Selbst nach 1000stündiger Xenotestbewitterung und im Tropentest konnte eine Änderung der Lackhaftung ASTM Norm D 2141-63T nicht festgestellt werden.

Durch Zusatz von mineralischen Füllstoffen und/oder organischen Modifizierungsmitteln können die Eigenschaften des Kantenbandes in weitem Umfang variiert werden, ohne daß dadurch die vorteilhaften Haftungseigenschaften verschlechtert werden. Beispielsweise wird die durch Corona-Behandlung eines Kantenbandes mit einer Schicht aus 95 Teilen Polyethylen und 5 Teilen Cellulose erzielte Oberflächenadhäsion durch Zusatz von 20 oder 30 Teilen Talkum nicht beeinflußt.

Die üblichen Farbstoffe und Pigmente wirken sich ebenfalls nicht nachteilig aus.

Bevorzugt ist oberhalb der Zwischenfolie oder Zwischenschicht (12 oder 12') und/oder oberhalb der füllstoffhaltigen Polyolefinschicht oder -folie (13) unmittelbar oder über mindestens eine Haftschicht oder Haftfolie (14, 14') und/oder mindestens eine Druckschicht oder Farbdruckschicht (15), eine Lackschicht (16) oder eine Schutzschicht oder Schutzfolie (7) angeordnet.

Nach einer weiteren bevorzugten Ausführungsform ist die ein- oder mehrschichtige, vorzugsweise UV-Stabilisatoren und/oder UV-Absorber enthaltene polymethylmethacrylat-, polyamid- und/oder polyesterhaltige Schutzschicht oder Schutzfolie (17) eine durch Extrusion, Coextrusion oder durch Beschichtungsauftrag erhaltende Schicht oder Folie und/oder sie enthält zusätzlich ein Fluorpolymerisat, ein Acrylat und/oder Polyacrylat und/oder eine die Schutzschicht oder Schutzfolie enthält mindestens eine flexibilisierende organisch-chemische Verbindung oder ein flexibilisierendes Polymerisat. Besonders zweckmäßig ist die Schutzschicht oder Schutzfolie transparent oder durchsichtig. Diese Ausführungsform wird vor allem dann gewählt, wenn eine darunterliegende Schicht einen Druck oder Farbdruck aufweist.

Bevorzugt weist die extrudierte, coextrudierte oder mehrschichtige Schutzschicht oder Schutzfolie (17) eine Dicke von 20 bis 350 µm, vorzugsweise 30 bis 250 µm, auf und/oder hat einen UV-Absorbergehalt und/oder UV-Stabilisatorgehalt von 0,02 bis 15 Gew.-%, vorzugsweise 0,2 bis 5 Gew.-% (bezogen auf 100 Gewichtsteile Polymer der Schutzschicht), und/oder sie enthält mindestens ein flexiblisierendes Acrylat oder Polyacrylat und/oder Polyvinylidenfluorid oder besteht daraus als Kunstharzbindemittel.

Nach einer weiteren Ausführungsform ist die ein- oder mehrschichtige, vorzugsweise UV-Stabilisatoren und/oder UV-Absorber enthaltende polyacrylat-, polymethylmethacrylat-, polyamid- und/oder polyesterhaltige Lackschicht (16) oder die Schutzschicht eine durch Beschichtungsauftrag erhaltene Schicht oder Folie, die vorzugsweise unter Mitverwendung mindestens eines organisch-chemischen Lösungsmittels in einer Schichtdicke von 5 bis 80 µm, vorzugsweise 8 bis 40 µm, aufgetragen ist bzw. wird.

Bevorzugt ist die coextrudierte Schicht oder Schutzschicht oder mehrschichtige Lackschicht oder Schutzfolie mindestens eine unter polymethylmethacrylathaltige Schicht oder Folie, die nach einer Ausführungsform vorzugsweise mindestens ein flexibilisierendes Acrylat oder Polyacrylat enthält und weist mindestens eine polyvinylidenfluoridhaltige obere Schicht oder obere Folie auf.

Nach einer weiteren bevorzugten Ausführungsform ist unterhalb der transparenten Lackschicht, der transparenten Schutzfolie oder transparenten Schutzschicht eine transparente Haftfolie oder transparente Haftschicht angeordnet, die eine Legierung oder Mischung und/oder ein Co-, Ter- oder Pfropfpolymerisat von einem Olefin bzw. Polyolefin, vorzugsweise Polyethylen und/oder Polypropylen mit einem Acrylester, vorzugsweise Methyl-, Ethyl-, Butyl-, Acrylester, und/oder Maleinsäureanhydrid und/oder mit einem Acrylathomo-, -co- und/oder -terpolymerisat und/oder ein Methacrylathomo-, -co- und/oder -terpolymerisat enthält oder daraus besteht.

Nach einer anderen bevorzugten Ausführungsform ist unterhalb der vorzugsweise eine glatte Oberfläche aufweisenden Lackschicht (16), Schutzfolie oder Schutzschicht (17) eine transparente Haftschicht (14) angeordnet, die vorzugsweise unter Verwendung mindestens eines Löse- oder Verdünnungsmittels auf die Unterseite der Oberfolie oder Oberschicht aufgebracht ist (unter nachfolgender Verdunstung, Abdampfung oder Entfernung des Löse- oder Verdünnungsmittels oder eines erheblichen Anteils desselben), die ein thermoplastisches Acrylathomo-, -co- und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder ein Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander enthält oder daraus besteht.

Die vorliegende Erfindung betrifft weiterhin ein Verfahren zur Herstellung eines Kantenbandes (Umleimer) aus Kunststoff, das gegebenenfalls Füllstoffe und/oder Pigmente enthält, bedruckt und/oder geprägt ist und mindestens eine Schicht oder Folie enthält, die eine Polyolefinschicht oder Polyolefinfolie oder polyolefinhaltige Schicht oder -folie ist und eine Propylenhomo- und/oder -copolymerisat und/oder ein Ethylen hoher Dichte (HDPE) enthält oder daraus besteht und mindestens eine unmittelbar darunter oder über eine oder mehrere Zwischenschichten angeordneten Haftvermittlerschicht besitzt. Gemäß der Erfindung mindestens eine Polyolefinschicht oder Polyolefinfolie als Zwischenschicht oder obere Schicht (12, 12') verwendet, die eine Mischung oder Legierung von einem Propylenhomo- oder -copolymerisat und einem HDPE und/oder LLDPE mit einem Gewichtsverhältnis des Propylenhomo- oder -copolymerisates (mit einem Comonomeranteil von weniger als 50 Gew.-%) zu dem HDPE und/oder LLDPE von 40 : 60 bis 60 : 40 sowie mindestens ein Stabilisator und/oder Gleitmittel und/oder mindestens ein Pigment, Farbstoff enthält oder daraus besteht. Weiterhin wird eine nicht selbstklebende lösemittelfreie coextrudierte Haftfolie eingesetzt und an der Unterseite des Kantenbandes angeordnet, die einen polaren Gruppen enthaltenden wasserschwer- oder wasserunlöslichen Kunststoff in Form eines Co-, Ter- und/oder Pfropfpolymerisates oder eine Legierung oder Mischung enthält oder daraus besteht. Die coextrudierte oder mehrfach extrudierte Verbundschicht (11, 12) sowie gegebenenfalls eine oder mehrere weitere Schichten wird durch mindestens ein erstes Walzenpaar, vorzugsweise Glättwerkwalzen, Prägewalzen und/oder Glättwerk- und Prägewalzen, geleitet, wobei das Walzenpaar eine Temperatur von 10 bis 50 °C, vorzugsweise 15 bis 35 °C, aufweist, der Walzenspalt, das Folienmaterial und die Dicke der Folie bzw. Verbundfolienbahn so eingestellt wird, daß sich nur ein Knet auf der der Haftschicht oder Haftfolie gegenüberliegenden Seite ausbildet und die Folie unmittelbar vor der weiteren Abkühlung oder nach der Abkühlung oder nach der Weiterverarbeitung, die durch Aufextrusion, Kaschierung oder Laminierung mit mindestens einer weiteren Kunststoffolie erfolgt, bei einer Materialdicke von 400 bis 4000 µm, in 12 bis 200 mm, vorzugsweise 15 bis 100 mm, breite Streifen geschnitten, gesägt oder gefräst wird.

Nach einer anderen bevorzugten Ausführungsform wird die coextrudierte oder mehrfach extrudierte Verbundschicht (11, 12) sowie gegebenenfalls eine oder mehrere weitere Schichten aus einer Breitschlitzextruderdüse austretend auf eine Chillroll- oder Gießkühlwalze gebracht und gekühlt oder innerhalb des ersten Drittels des Chillroll- oder Gießkühlwalzenumfanges, vorzugsweise innerhalb des ersten Viertels derselben (berechnet von der Stelle der Chillroll-Walze an, wo die Schmelze auftritt), weiterverarbeitet, vorzugsweise durch Aufextrusion, Kaschierung oder Laminierung, mit mindestens einer weiteren Kunststoffolie oder -folienbahn, vorzugsweise bei einer Temperatur von 40 bis 110 °C, verbunden oder nach oder ohne diese Weiterverarbeitung in 12 bis 200 mm, vorzugsweise 15 bis 100 mm breite Streifen geschnitten, gesägt oder gefräst.

Die vorliegende Erfindung betrifft weiterhin ein Verfahren zur Beschichtung von Holz- oder Holzwerkstoffkanten unter Verwendung des erfindungsgemäßen Kantenbandes. Auf die zu beschichtenden Holz- oder Holzwerkstoffkanten wird dabei zur Herstellung von Möbel oder Möbelteilen ein Schmelzkleber bei Temperaturen von 120 bis 245 °C, vorzugsweise 140 bis 220 °C, aufgebracht und das in Streifen geschnittene, gefräste, gesägte oder in ähnlicher Weise auf eine Streifenbreite von 12 bis 200 mm, vorzugsweise 15 bis 100 mm, geteilte Kantenband, das mindestens die Schichten (11) und (12) enthält, bei einer Kantenbandtemperatur unter 80 °C, vorzugsweise unter 35 °C, auf die heiße Schmelzkleberschicht der Holz- oder Holzwerkstoffkante unter Druck, vorzugswiese unter Rollen- oder Walzendruck, aufgebracht. Die über die Kanten stehenden Ränder werden an den Kanten, Ecken oder ähnlichen Abschlußrändern abgeschnitten, abgefräst, abgesägt oder in ähnlicher Weise abgetrennt.

Nach einer anderen bevorzugten Ausführungsform wird auf die zu beschichtenden Holz- oder Holzwerkstoffkanten zur Herstellung von Möbel oder Möbelteilen ein mit einem Schmelzkleber vorbeschichtetes Kantenband aufgebracht, wobei das in Streifen geschnittenen, gefräste, gesägte oder in ähnlicher Weise auf eine Streifenbreite von 12 bis 200 mm, vorzugsweise 15 bis 100 mm, geteilte Kantenband, das mindestens die Schichten (11) und (12) enthält und die Schmelzklebeschicht des Bandes durch Erhitzen auf Temperaturen über 80 °C, vorzugsweise auf 100 bis 245 °C, hitzeaktiviert und mit der heißen Schmelzkleberschicht auf die Holz- oder Holzwerkstoffkante unter Druck, vorzugsweise unter Rollen- oder Walzendurck, aufgebracht und die über die Kanten stehenden Ränder an den Kanten, Ecken oder ähnlichen Abschlußränder abgeschnitten, abgefräst, abgesägt oder in ähnlicher Weise abgetrennt werden.

Die Erfindung betrifft weiterhin die Verwendung des Kantenbandes zur Beschichtung von Holz- oder Holzwerkstoffenkanten zur Herstellung von Möbel oder Möbelteilen, unter Mitverwendung eines Schmelzklebers, vorzugsweise eines Ethylen-Vinylacetat- und/oder Ethylen-Acrylsäure- und/oder Ethylen-Acrylsäureester in Form von Polymerisaten, Co- oder Terpolymerisaten, Pfropf- oder Blockpolymerisaten enthaltenden oder haltigen Schmelzklebers oder eines Schmelzklebers auf Basis Polyamid oder Polyurethan.

### Zeichnungsbeschreibung

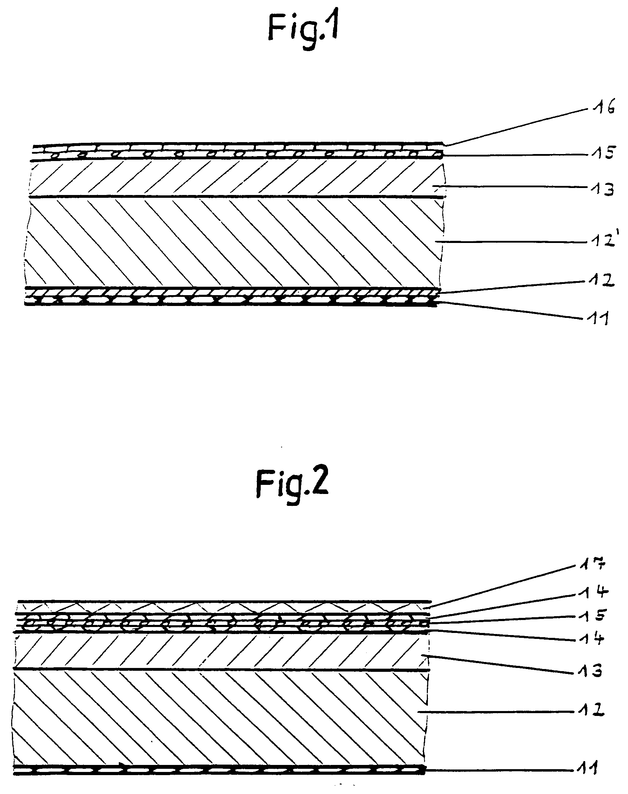

In den beigefügten Zeichnungen ( Fig. 1 bis 8) sind einige bevorzugte Ausführungsformen der Erfindung schematisch wiedergegeben.

In den Fig. 1 bis 4 sind Querschnitte durch das erfindungsgemäße Kantenband dargestellt. Bei sämtlichen Ausführungsformen gemäß Fig. 1 bis 4 ist oberhalb der Haftschicht oder Haftfolie (11) eine Polyolefinschicht oder polyolefinhaltige Schicht (12) angeordnet, die mit einer weiteren propylenhomo- oder -copolymerisathaltigen Zwischenschicht oder Zwischenfolie (12') und/oder der füllstoffhaltigen Polyolefinschicht oder -folie (13) verbunden ist.

Bei den besonders bevorzugten Ausführungsformen gemäß Fig. 1 und 2 ist die füllstoffhaltige Polyolefinschicht oder-folie (13) mit mindestens einer Druckschicht oder Farbdruckschicht (15), vorzugsweise mehreren teilflächig aufgebrachten Farbdruckschichten (15) versehen, die unmittelbar oder über eineHaftschicht (14) mit der transparenten Lackschicht (16) oder der transparenten Schutzschicht oderSchutzfolie (17) verbunden sind.

Bei der Ausführungsform gemäß Fig. 2 ist zwischen der füllstoffhaltigen Polyolefinschicht oder -folie und der Farbdruckschicht (15) zusätzlich noch eine Haftschicht oder Haftfolie (14) angeordnet.

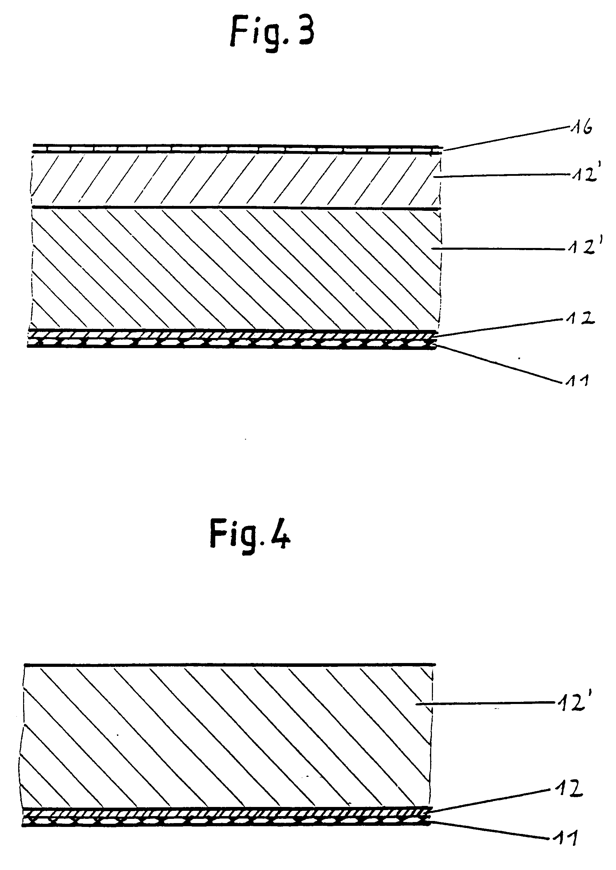

In Fig. 3 ist die oberhalb der Schicht (12') angeordnete weitere Polyolefinschicht (12') eine Verarbeitungshilfsmittel enthaltende Propylenhomopolymerisatschicht oder Folie oder eine füllstoffhaltige Polyolefinschicht oder Folie (13) und wird von einer Lackschicht (16), vorzugsweise Acrylat- oder Polyurethanlackschicht, oder einer Schutzfolie (17) überdeckt. In Fig. 4 ist ein Aufbau eines einfachen Kantenbandes gezeigt, das für nicht sehr anspruchsvolle Kantenbeschichtungen bestimmt ist.

In den Fig. 5 bis 8 sind Ausführungsformen des erfindungsgemäßen Verfahrens unter Verwendung bestimmter Vorrichtungen schematisch dargestellt.

In den Fig. 5 und 6 ist der Extruder /1) mit Coextrusionsvorrichtung (2) und (3), der Blackbox (4) und der Breitschlitzdüse (5) versehen bzw. mit diesen kombiniert, während gemäß Fig. 7 und 8 die Mehrschichtextrusionsanlage (1) und Blackbox als eine Einheit dargestellt wird, die mit der Breitschlitzdüse (5) in Verbindung steht.

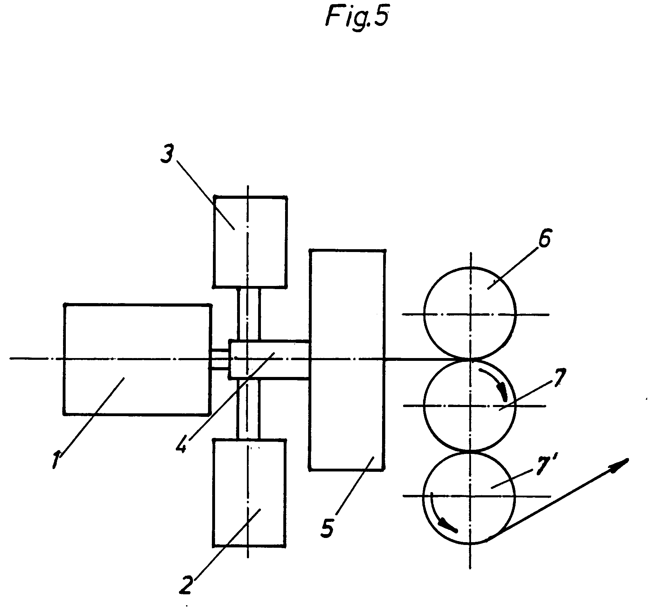

Bei der einfachen Ausführungsform gemäß Fig. 5 gelangt die mehrschichtige Verbundfolie, aus dem das Kantenband hergestellt wird, zu den Glättwerkwalzen (6) und (7) (mit oder ohne Prägestruktur) und der weiteren Glättwerkwalze (7').

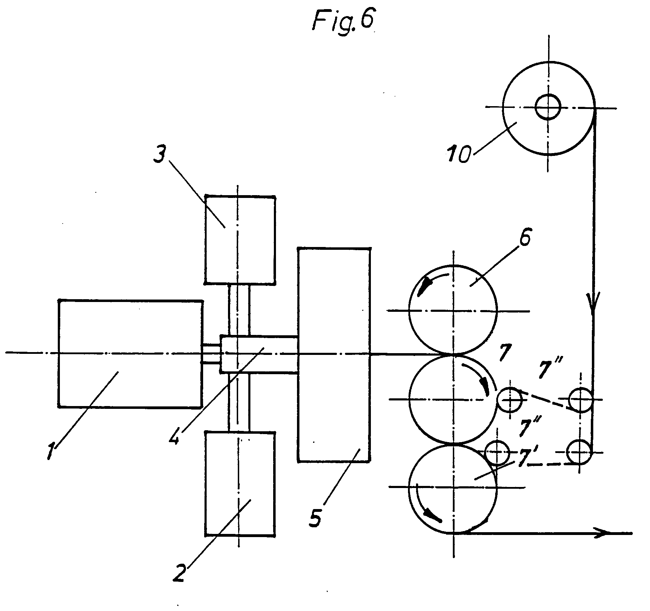

Gemäß der besonders bevorzugten Ausführungsform in Fig. 6 wird von der Folienabwickelwalze (10) die füllstoffhaltige Polyolefinfolie (13), die nach einer Ausführungsform Farbdruckschichten und/oder eine Lackschicht, Schutzschicht oder Schutzfolie enthält, zugeführt und durch mindestens eine Andruckwalze (7'') unter Walzendruck mit der coextrudierten oder mehrschichtextrudierten Folie (11), (12) oder (11, 12, 12') vereinigt.

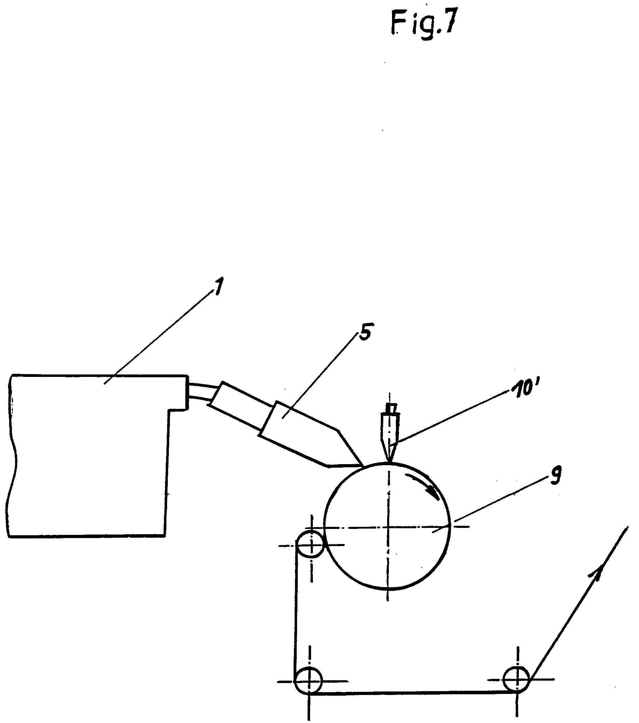

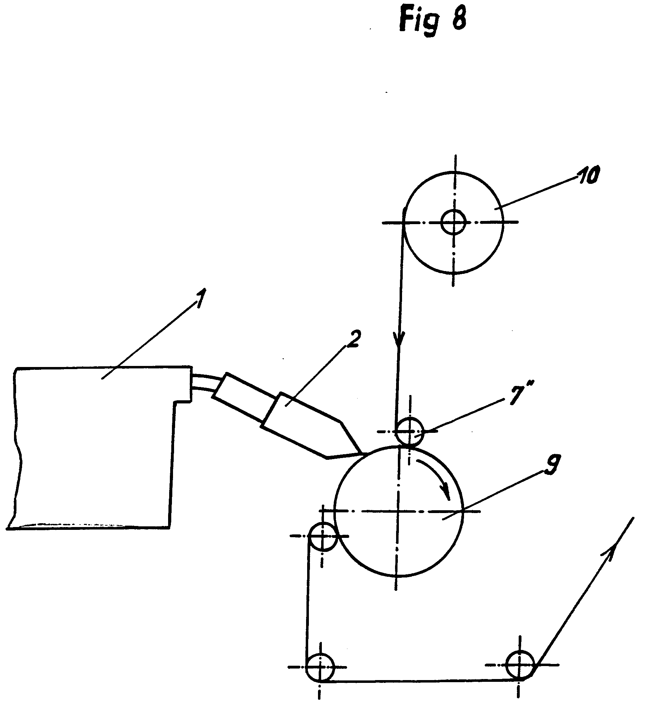

Bei den Fig. 7 und 8 gelangt die aus der Breitschlitzextruderdüse (5) austretende coextrudierte (mindestens die Schichten (11), (12) enthaltend) oder mehrschichtextrudierte (mindestens die Schichten (11), (12), (12') enthaltend) Folienschmelzbahn auf die Chillroll- oder Gießkühlwalze (9) und wird entweder mittels einer weiteren Breitschlitzextruderdüse (10') beschichtet oder in der Nähe dieser Stelle durch eine Kühlvorrichtung (10') (z.B. Luftstrahldüsen oder andere Kühlvorrichtungen (10')) gekühlt.

Gemäß Fig. 8 wird von der Folienabwickelvorrichtung (10) die Folienbahn (z.B. (13) oder die Mehrschichtbahn) der Chillrollwalze oder Gießkühlwalze (9) zugeführt und mittels Andruckwalze (7'') mit der auf der Chillroll- oder Gießkühlwalze (9) befindlichen Folienbahn, die z.B. die Schichten (11) und (12) oder (11), (12) und (12') enthält, vereint.

### Beispiele für die Folien- oder Schichtenzusammensetzung des Kantenbandes

- Beispiel 1: Eine lackierte, bedruckte, geprägte Polyolefinfolie mit Oberschicht (16), einem Zweikomponenten-Polyurethanlack, einer darunterliegenden Druckschicht (15) und der Folienschicht (13), bestehend aus
- 100 Gew.-Teile: PP-Homopolymerisat (Propylenhomopolymerisat)
- 30 Gew.-Teile: Calciumcarbonat + Pigment + Verarbeitungsmittel
wird auf die Füllschicht (12), die aus einer Polyolefinmischung Polypropylen Copolymerisat + HDPE 80/20 besteht und 50 Teile Calciumcarbonat + Pigmente + Verarbeitungshilfsmittel enthält, aufkaschiert.
Darunter angeordnet ist die Zwischenschicht (12), bestehend aus einer Polyolefinmischung Polypropylen-Copolymerisat + HDPE 50/50, und die Haftschicht (11) für Schmelzkleber auf der Basis eines Polyethylen-Terpolymerisates, bestehend aus
- 30 Gew.-%: Methylacrylat
- 2 Gew.-%: Maleinsäureanhydrid
- 68 Gew.-%: Ethylen
- Beispiel 2: Eine transparent abgedeckte, bedruckte, geprägte Polyolefinfolie (PO-Folie) mit Oberschicht mit transparenter PMMA-Schicht (17) mit Haftvermittlerschicht auf Basis Acrylat + Isocyanat (14), eine Druckschicht (15), einer HV-Schicht auf Basis Acrylat + Isocyanat (14) und Folienschicht (13), bestehend aus HDPE + Cellulose 80/20 + Pigment + Additive, wird auf die Füllschicht (12) aus HDPE + Calciumcarbonat + Pigment + Additive aufkaschiert.
Die darunterliegende Haftschicht (11) besteht aus einem EVA-Copolymerisat mit einem Vinylacetatgehalt von 20 Gew.-%.
- Beispiel 3: Eine lackierte, bedruckte, geprägte Polyolefinfolie (PO-Folie) mit Oberschicht (17), bestehend aus einem Zweikomponenten-Acryllack, der Druckschicht (15) und der PO-Schicht (13), bestehend aus einer PO-Mischung PP-HDPE (80/20) + 80 Teilen Calciumcarbonat (auf 100 Teile Polymer) + Pigment + Verarbeitungshilfsmittel, wird auf die Füllschicht (12), bestehend aus HDPE + PP 50/50 und die darunterliegende Haftschicht (11), bestehend aus einem PE-Copolymerisat mit 29 Gew.-% Methylacrylat, aufkaschirt.
- Beispiel 4: Eine lackierte, geprägte Uni-Folie mit Oberschicht (17), bestehend aus einem Zweikomponenten-Polyurethanlack, und der Polyolefinfolie (13), bestehend aus HDPE + Cellulose 80/20 + Pigmente + Additive, wird auf eine Füllschicht (12), bestehend aus 100 Teilen HDPE + 50 Teile Caliumcarbonat + Pigment + Verarbeitungshilfsmittel, und eine Haftschicht, bestehend aus einem EVA-Copolymerisat mit einem Vinylacetatgehalt von 33 Gew.-%, aufkaschirt.
- Beispiel 5: Eine geprägte Uni-Kantenfolie, bestehend aus einer Deck/Füllschicht (12), bestehend aus einer PO-Mischung, PP-Copolymerisat und HDPE (50/50) + Pigment + Vrarbeitungshilfsmittel und einer Haftschicht aus einem PE-Terpolymerisat, bestehend aus
- 30 Gew.-%: Methylacrylat
- 2 Gew.-%: Maleinsäureanhydrid
- 60 Gew.-%: Ethylen
- Beispiel 6: Weitere Beispiele für die polyolefinhaltige Schicht oder Polyolefinfolie (12)
a) 88 Gew.-% Polyethylen (HDPE)
   9 Gew.-% Calciumcarbonat
   2 Gew.-% Pigmente
   2 Gew.-% Additive oder Verarbeitungshilfsmittel
b) 48 Gew.-% Polypropylen
   48 Gew.-% Polyethylen
   3 Gew.-% Pigmente
   1 Gew.-% Verarbeitungshilfs- und Zusatzmittel
- Beispiel 7: Weitere Beispiele für die Polyolefinschicht oder -folie (13)
a) 80 Gew.-Teile Propylenhomopolymerisat
   15 Gew.-Teile Niederdruckpolyethylen (HDPE)
   5 Gew.-Teile Ethylen-Vinylakohol-Copolymerisat (EVAL)
   99,9 Gew.-Teile Calciumcarbonat
   0,5 Gew.-Teile Hydroxystearinsäure, die auf der Oberfläche von Calciumcarbonat angeordnet ist
   0,5 Gew.-Teile Gleitmittel und Stabilisatoren
b) 80 Gew.-Teile Propylenhomopolymerisat
   15 Gew.-Teile Niederdruckpolyethylen (HDPE)
   5 Gew.-Teile Polyvinylalkohol (PVAL)
   99,9 Gew.-Teile Kaolin
   0,5 Gew.-Teile Polydimethylsiloxan, das auf der Oberfläche von Kaolin angeordnet ist
   0,5 Gew.-Teile Gleitmittel und Stabilisatoren
c) 80 Gew.-Teile Propylenhomopolymerisat
   15 Gew.-Teile Niederdruckpolyethylen (HDPE)
   5 Gew.-Teile Copolymerisat aus Ethylen und Acrylsäure (EAA))
   79,5 Gew.-Teile Calciumcarbonat
   15 Gew.-Teile Talkum
   0,5 Gew.-Teile Stearinsäure, die auf der Oberfläche des Füllstoffgemisches aus Caliumcarbonat und Talkum angeordnet ist
   5 Gew.-Teile Kieselgel
   0,5 Gew.-Teile Gleitmittel und Stabilisatoren
d) 90 Gew.-Teile Propylenhomopolymerisat
   5 Gew.-Teile Niederdruckpolyethylen (HDPE)
   5 Gew.-Teile Ethylen-Vinylalkohol-Copolymerisat (EVAL)
   49,5 Gew.-Teile Calciumcarbonat
   45 Gew.-Teile Kaolin
   0,25 Gew.-Teile Stearinsäure
   0,25 Gew.-Teile Polydimethylsiloxan (die auf der Oberfläche des Füllstoffgemisches aus Calciumcarbonat und Kaolin angeordnet sind)
   5 Gew.-Teile Kieselgel
   0,5 Gew.-Teile Gleitmittel und Stabilisatoren
   Die Oberflächenschicht bestand aus einem Polyurethanharzlack mit einer mittleren Dicke von 10 µm
e) 88 Gew.-% Polyethylen (HDPE)
   9 Gew.-% Cellulose mit einer Teilchengröße unter 50 µm
   2 Gew.-% Pigmente
   2 Gew.-% Additive oder Verarbeitungshilfsmittel
f) 80 Gew.-Teile Propylen
   Copolymerisat mit einem Comonomeranteil unter 8 Gew.-% und 20 Gew.-Teilen Cellulose mit einer Faserlänge unter 50 µm sowie 2 Gew.-Teile Verarbeitungshilfs- oder Zusatzmittel
- Beispiel 8: Weiteres Beispiel für die transparente Abdeckfolie
- 90 Gew.-Teile: Polymethylmetacrylat
- 2 Gew.-Teile: Verarbeitungshilfsmittel

## Patentansprüche

1. Geprägtes und/oder bedrucktes Kantenband aus Kunststoff, das Pigmente und/oder Füllstoffe enhält, eine Polyolefinschicht oder Polyolefinfolie oder polyolefinhaltige Schicht oder Folie ist und ein Propylenhomo- und/oder - copolymerisat und/oder ein Ethylen hoher Dichte (HDPE) enthält oder daraus besteht und mindestens eine unmittelbar darunter oder über eine oder mehrere Zwischenschichten angeordnete Haftvermittlerschicht (11) besitzt, dadurch gekennzeichnet, daß mindestens eine Polyolefinschicht oder Polyolefinfolie als Zwischenschicht oder obere Schicht (12, 12') eine Mischung oder Legierung von einem Propylenhomo- oder -copolymiersat und einem HDPE und/oder LLDPE mit einem Gewichtsverhältnis des Propylenhomo- oder -copolymerisates (mit einem Comonomeranteil von weniger als 50 Gew.-%) zu dem HDPE und/oder LLDPE von
40 : 60 bis 60 : 40
sowie mindestens ein Stabilisator, Gleitmittel, Pigment und/oder Farbstoff enthält oder daraus besteht, daß eine nicht selbstklebende, lösemittelfreie coextrudierte Haftfolie an der Unterseite des Kantenbandes angeordnet ist, die einen polaren Gruppen enthaltenden wasserschwer- oder wasserunlöslichen Kunststoff in Form eines Co-, Ter- und/oder Pfropfpolymerisates oder einer Legierung oder Mischung enthält oder daraus besteht, daß das Kantenband aus der mindestens zweischichtigen papierschichtenfreien Kunststoffbahn oder der mindestens zweischichtigen papierschichtenfreien Endlosplatte besteht und eine Materialdicke von
400 bis 4000 µm
aufweist sowie in Streifen von
12 bis 200 mm
geschnitten ist.

2. Kantenband nach Anspruch 1, dadurch gekennzeichnet, daß oberhalb der Zwischenschicht oder Zwischenfolie (12') eine füllstoffhaltige Polyolefinschicht oder -folie (13) angeordnet ist, die eine Mischung oder Legierung von 30 bis 70 Gew.-%, vorzugsweise 40 bis 60 Gew.-%, Ethylenhomo- und/oder -copolymerist (mit einem Comonomeranteil unter 15 Gew.-% bezogen auf 100 Gewichtisteile Ethylencopolymerisat) und 70 bis 30 Gew.-%, vorzugsweise 60 bis 40 Gew.-% Propylenhomo- und/oder -copolymerisat (mit einem Comonomeranteil) enthält oder das Kunststofffbindemittel aus diesem besteht.

3. Kantenband nach Ansprüchen 1 und 2, dadurch gekennzeichnet, daß die coextrudierte Haftfolie als polare Gruppen enthaltenden Kunststoff mindestens ein Ethylen-Vinylacetat-Co- und/oder -terpolymerisat, ein Ethylen-Acrylsäureester- oder Ethylen-Acrylsäure-Co- oder -terpolymerisat, ein Ethylen-Methacrylsäureester- oder Ethylen-Methacrylsäure-Co- oder -terpolymerisat, ein Maleinsäure oder Maleinsäureanhydrid enthaltendes Polymerisat, -co- oder -terpolymerisat und/oder eine Paratoluolsulfonsäure oder Sulfonsäuregruppen enthaltendes Polymerisat, Co- oder Terpolymerisat, enthält oder daraus besteht.

4. Kantenband nach einem oder mehreren der Ansprüche 1 bis 3, dadurch gekennzeichnet, daß oberhalb der Zwischenschicht oder Zwischenfolie (12'), die Propylenhomo- oder -copolymerisat (mit einem Comonomeranteil unter 15 Gew.-%) und HDPE oder LLDPE als Bindemittel enthält oder daraus besteht, eine weitere Polyolefinschicht oder -folie (13) angeordnet ist, die aus einem Gemisch von
70 bis 97,5 Gew.-Teile, vorzugsweise
75 bis 85,0 Gew.-Teile,
eines Propylenhomo- oder -copolymerisates,
5 bis 30 Gew.-Teile, vorzugsweise
15 bis 25 Gew.-Teile,
HDPE, das bezogen auf 100 Gewichtsteile HDPE durch
0 bis 35 Gew.-%, vorzugsweise
0 bis 10 Gew.-%,
bezogen auf 100 Gewichtsteile eingesetztem HDPE durch Polyvinylalkohol, Ethylen-Vinylalkohol-Mischpolymerisat, Ethylen-Acrylsäure-Mischpolymerisat, Acrylsäureester-Acrylsäure-Terpolymerisat und/oder Polycaprolacton ersetzt ist und
50 bis 150 Gew.-%, vorzugsweise
70 bis 120 Gew.-%,
bezogen auf 100 Gewichtsteile Kunststoffbindemittel eines feinteiligen Füllstoffes besteht oder diese Bestandteile enthält sowie gegebenenfalls Verarbeitungsmittel, Farbpigmente und/oder Modifizierungsmittel.

5. Kantenband nach einem oder mehreren der Ansprüche 1 bis 4, dadurch gekennzeichnet, daß mehr als 60 Gew.-%, vorzugsweise mehr als 75 Gew.-%, des in der Polyolefinschicht oder -folie (13) und/oder in der Zwischenschicht oder Zwischenfolie (12') oder oberen Schicht (12) eingesetzten Füllstoffes mit einem Oberflächenbehandlungsmittel und/oder einer reaktiven Substanz in einer Gewichtsmenge von 0,05 bis 10 Gew.-% (bezogen auf 100 Gewischtsteile Füllstoff), vorzugsweise 0,5 bis 6 Gew.-% (bezogen auf 100 Gew.-Teile Füllstoff), auf der Oberfläche behandelt und/oder beschichtet ist und daß der mittlere Körnungsdurchmesser des Füllstoffes oder Füllstoffgemisches 0,01 bis 30 µm, vorzugsweise 0,1 bis 10 µm, beträgt.

6. Kantenband nach einem oder mehreren der Ansprüche 1 bis 5, dadurch gekennzeichnet, daß oberhalb der Zwischenschicht oder Zwischenfolie (12'), die Propylenhomo- oder -copolymerisat (mit einem Comonomeranteil unter 15 Gew.-%) und HDPE oder LLDPE als Bindemittel enthält oder daraus besteht, eine weitere Polyolefinschicht oder -folie (13) angeordnet ist, die Polypropylen und/oder Polyethylen, vorzugsweise HDPE, als Kunststoff enthält oder daraus besteht sowie 0,5 bis 55 Gew.-%, vorzugsweise 3 bis 35 Gew.-%, eines organischen Füllstoffes oder Füllstoffgemisches, vorzugsweise Cellulose mit einem mittleren Teilchendurchmesser von 5 bis 100 µm, vorzugsweise 7 bis 50 µm, und einer größten mittleren Länge bis 250 µm, vorzugsweise bis 200 µm, und/oder Stärke (bezogen auf die Summe von Polyolefin und organischen Füllstoff) sowie gegebenenfalls Verarbeitungshilfsmittel, Farbpigmente, Farbstoffe und/oder Modifizierungsmittel enthält oder daraus besteht.

7. Kantenband nach einem oder mehreren der Ansprüche 1 bis 6, dadurch gekennzeichnet, daß oberhalb der Zwischenfolie oder Zwischenschicht (12 oder 12') und/oder oberhalb der füllstoffhaltigen Polyolefinschicht oder -folie (13) unmittelbar oder über mindestens eine Haftschicht oder Haftfolie (14, 14') und/oder mindestens eine Druckschicht oder Farbdruckschicht (15), eine Lackschicht (16) oder eine Schutzschicht oder Schutzfolie (17) angeordnet ist.

8. Kantenband nach einem oder mehreren der Ansprüche 1 bis 7, dadurch gekennzeichnet, daß die ein- oder mehrschichtige, vorzugsweise UV-Stabilisatoren, und/oder UV-Absorber enthaltende polymethylmethacrylat-, polyamid- und/oder polyesterhaltige Schutzschicht (17) eine durch Extrusion, Coextrusion oder durch Beschichtungsauftrag enthaltende Schicht oder Folie ist und/oder zusätzlich ein Fluorpolymerisat, ein Acrylat und/oder Polyacrylat und/oder eine die Schutzschicht oder Schutzfolie flexibilisierende organisch-chemische Verbindung oder ein flexibilisierendes Polymerisat enthält.

9. Kantenband nach einem oder mehreren der Ansprüche 1 bis 8, ddurch gekennzeichnet, daß die extrudiert, coextrudierte oder mehrschichtige Schutzschicht oder Schutzfolie (17) eine Dicke von 20 bis 350 µm, vorzugsweise 30 bis 250 µm, aufweist einen UV-Absorbergehalt und/oder UV-Stabilisatorgehalt von 0,02 bis 15 Gew.-%, vorzugsweise 0,2 bis 5 Gew.-% (bezogen auf 100 Gewichtsteile Polymer der Schutzschicht), besitzt und/oder mindestens ein flexibilisierendes Acrylat oder Polyacrylat und/oder Polyvinylidenfluorid enthält oder daraus besteht.

10. Kantenband nach einem oder mehreren der Ansprüche 1 bis 9, dadurch gekennzeichnet, daß die ein- oder mehrschichtige, vorzugsweise UV-Stabilisatoren und/oder UV-Absorber enthaltende polyacrylat-, polymethylmethacrylat-, polyamid- und/oder polyesterhaltige Lackschicht (16) oder die Schutzschicht eine durch Beschichtungsauftrag erhaltene Schicht oder Folie ist, die vorzugsweise unter Mitverwendung mindestens eines organisch-chemischen Lösungsmittels in einer Schichtdicke von 5 bis 80 µm, vorzugsweise 8 bis 40 µm, aufgetragen ist.

11. Kantenband nach einem oder mehreren der Ansprüche 1 bis 10, dadurch gekennzeichnet, daß die coextrudierte oder mehrschichtige Lackschicht, Schutzschicht oder Schutzfolie mindestens eine unter polymethylmethacrylathaltige Schicht oder Folie, die vorzugsweise mindestens ein flexiblisierendes Acrylat oder Polyacrylat enthält, besitzt und mindestens eine polyvinylidenfluoridhaltige obere Schicht oder obere Folie aufweist.

12. Kantenband nach einem oder mehreren der Ansprüche 1 bis 11, dadurch gekennzeichnet, daß unterhalb der transparenten Lackschicht oder transparenten Schutzfolie oder Schutzschicht eine transparente Haftfolie oder Haftschicht angeordnet ist, die eine Legierung oder Mischung und/oder ein Co-, Ter- oder Pfropfpolymerisat von einem Olefin bzw. Polyolefin, vorzugsweise Polyethylen und/oder Polypropylen mit einem Acrylester, vorzugsweise Methyl-, Ethylen-, Butyl-Acrylester, und/oder Maleinsäureanhydrid und/oder mit einem Acrylathomo-, -co- und/oder -terpolymerisat und/oder ein Methacrylathomo-, -co- und/oder -ter polymerisat enthält oder daraus besteht.

13. Kantenband nach einem oder mehreren der Ansprüche 1 bis 12, dadurch gekennzeichnet, daß unterhalb der vorzugsweise eine glatte Oberfläche aufweisenden Lackschicht (16), Schutzfolie oder Schutzschicht (17) eine transparente Haftschicht (14), die vorzugsweise unter Verwendung mindestens eines Löse- oder Verdünnungsmittels auf die Unterseite der Oberfolie oder Oberschicht aufgebracht ist (unter nachfolgender Verdunstung, Abdampfung oder Entfernung des Löse- oder Verdünnungsmittels oder eines erheblichen Anteils desselben), angeordnet ist, die ein thermoplastisches Acrylathomo-, -co- und/oder -terpolymerisat, vorzugsweise in Kombination mit einem Polyisocyanat, und/oder ein vernetzbares OH-gruppenhaltiges Acrylat, vorzugsweise in Kombination mit einem Polyisocyanat, und/oder Methacrylathomo-, -co- und/oder -terpolymerisat und/oder ein Polyisocyanat, vorzugsweise Hexamethylendiisocyanat, und/oder eine Legierung oder Mischung einer oder mehrerer dieser Verbindungen untereinander enthält oder daraus besteht.

14. Verfahren zur Herstellung eines Kantenbandes aus Kunststoff, das Füllstoffe und/oder Pigmente enthält, bedruckt und/oder geprägt ist und mindestens eine Schicht oder Folie enthält, die eine Polyolefinschicht oder Polyolefinfolie oder polyolefinhaltige Schicht oder -folie ist und eine Propylenhomo- und/oder -copolymerisat und/oder ein Ethylen hoher Dichte (HDPE) enthält oder daraus besteht und mindestens eine unmittelbar darunter oder über eine oder mehrere Zwischenschichten angeordneten Haftvermittlerschicht besitzt, dadurch gekennzeichnet, daß mindestens eine Polyolefinschicht oder Polyolefinfolie als Zwischenschicht oder obere Schicht (12, 12') verwendet wird, die eine Mischung oder Legierung von einem Propylenhomo- oder -copolymerisat und einem HDPE und/oder LLDPE mit einem Gewichtsverhältnis des Propylenhomo- oder -copolymerisates (mit einem Comonomeranteil von weniger als 50 Gew.-%) zu dem HDPE und/oder LLDPE von
40 : 60 bis 60 : 40
sowie mindestens ein Stabilisator und/oder Gleitmittel und/oder mindestens ein Pigment, Farbstoff enthält oder daraus besteht, daß eine nicht selbstklebende lösemittelfreie coextrudierte Haftfolie verwendet und an der Unterseite des Kantenbandes angeordnet wird, die einen polaren Gruppen enthaltenden wasserschwer- oder wasserunlöslichen Kunststoff in Form eines Co-, Ter- und/oder Pfropfpolymerisates oder eine Legierung oder Mischung enthält oder daraus besteht, daß die coextrudierte oder mehrfach extrudierte Verbundschicht (11, 12) sowie gegebenenfalls eine oder mehrere weitere Schichten durch mindestens ein erstes Walzenpaar, vorzugsweise Glättwerkwalzen, Prägewalzen und/oder Glättwerk- und Prägewalzen, geleitet wird, wobei das Walzenpaar eine Temperatur von 10 bis 50 °C, vorzugsweise 15 bis 35 °C, aufweist, der Walzenspalt, das Folienmaterial und die Dicke der Folie bzw. Verbundfolienbahn so eingestellt wird, daß sich nur ein Knet auf der der Haftschicht oder Haftfolie gegenüberliegenden Seite ausbildet und die Folie unmittelbar vor der weiteren Abkühlung oder nach der Abkühlung oder nach der Weiterverarbeitung, die durch Aufextrusion, Kaschierung oder Laminierung mit mindestens einer weiteren Kunststoffolie erfolgt, bei einer Materialdicke von 400 bis 4000 µm, in 12 bis 200 mm, vorzugsweise 15 bis 100 mm, breite Streifen geschnitten, gesägt oder gefräst wird.

15. Verfahren nach Anspruch 14, dadurch gekennzeichnet, daß als Kunststoff für die coextrudierte Haftfolie mindestens ein Ethylen-Vinylacetat-Co- und/oder -terpolymerisat, ein Ethylen-Acrylsäureester- oder Ethylen-Acrylsäure-Co- oder -terpolymerisat, ein Ethylen-Methacrylsäureester- oder Ethylen-Methacrylsäure-Co- oder -terpolymerisat, ein Maleinsäure oder Maleinsäureanhydrid enthaltendes Polymerisat, -co- oder -terpolymerisat und/oder eine Paratoluolsulfonsäure oder Sulfonsäuregruppen enthaltendes Polymerisat, Co- oder Terpolymerisat verwendet wird.

16. Verfahren nach Ansprüchen 14 und 15, dadurch gekennzeichnet, daß die coextrudierte oder mehrfach extrudierte Verbundschicht (11, 12) sowie gegebenenfalls eine oder der mehrere weitere Schichten aus einer Breitschlitzextruderdüse austretend auf eine Chillroll- oder Gießkühlwalze gebracht und gekühlt oder innerhalb des ersten Drittels des Schillroll- oder Gießkühlwalzenumfanges, vorzugsweise innerhalb des ersten Viertels derselben (berechnet von der Stelle der Chillrollwalze an, wo die Schmelze austritt), weiterverarbeitet, vorzugsweise durch Aufextrusion, Kaschierung oder Laminierung, mit mindestens einer weiteren Kunststoffolie oder -folienbahn, vorzugsweise bei einer Temperatur von 40 bis 110 °C, verbunden oder nach oder ohne diese Weiterverarbeitung in 12 bis 200 mm, vorzugsweise 15 bis 100 mm, breite Streifen gesschnitten, gesägt oder gefräst wird.

17. Verfahren zur Beschichtung von Holz- oder Holzwerkstoffkanten der Ansprüche 1 bis 16, dadurch gekennzeichnet, daß auf die zu beschichtenden Holz- oder Holzwerkstoffkanten zur Herstellung von Möbel oder Möbelteilen ein Schmelzkleber bei Temperaturen vofn 120 bis 245 °C, vorzugsweise 140 bis 220 °C, aufgebracht und das in Streifen geschnittene, gefräste, gesägte oder in ähnlicher Weise auf eine Streifenbreite von 12 bis 200 mm, vorzugsweise 15 bis 100 mm, geteilte Kantenband, das mindestens die Schichten (11) und (12) enhält, bei einer Kantenbandtemperatur unter 80 °C, vorzugsweise unter 35 °C, auf die heiße Schmelzkleberschicht der Holz- oder Holzwerkstoffkante unter Druck, vorzugsweise unter Rollen- oder Walzendruck, aufgebracht und die über die Kanten stehenden Ränder an den Kanten, Ecken oder ähnlichen Abschlußrändern abgeschnitten, abgefräst, abgesägt oder in ähnlicher Weise abgetrennt werden.

18. Verfahren zur Beschichtung von Holz- oder Holzwerkstoffkanten unter Verwendung eines Kantenbandes nach einem oder mehreren der Ansprüche 1 bis 17, dadurch gekennzeichnet, daß auf die zu beschichtenden Holz- oder Holzwerkstoffkanten zur Herstellung von Möbeln oder Möbelteilen ein mit einem Schmelzkleber vorbeschichtetes Kantenband aufgebracht wird, wobei das in Streifen geschnittene, gefräste, gesägte oder in ähnlicher Weise auf eine Streifenbreite von 12 bis 200 mm, vorzugsweise 15 bis 100 mm, geteilte Kantenband, das mindestens die Schichten (11) und (12) enthält und die Schmelzklebeschicht des Bandes durch Erhitzen auf Temperaturen über 80 °C, vorzugsweise auf 100 bis 245 °C, hitzeaktiviert und mit der heißen Schmelzkleberschicht auf die Holz- oder Holzwerkstoffkante unter Druck, vorzugsweise unter Rollen- oder Walzendruck, aufgebracht und die über die Kanten stehenden Ränder an den Kanten, Ecken oder ähnlichen Abschlußrändern abgeschnitten, abgefräst, abgesägt oder in ähnlicher Weise abgetrennt werden.

19. Verwendung des Kantenbandes nach einem oder mehreren der Ansprüche 1 bis 13 zur Beschichtung von Holz- oder Holzwerkstoffkanten zur Herstellung von Möbeln oder Möbelteilen, unter Mitverwendung eines Schmelzklebers, vorzugsweise eines Ethylen-Vinylacetat, Ethylen-Acrylsäure und/oder eines Ethylen-Acrylsäureester in Form von Polymerisaten, Co- oder Terpolymerisaten, Pfropf- oder Blockpolymerisaten enthaltenden Schmelzklebers oder eines Schmelzklebers auf Basis Polyamid oder Polyurethan.

## Claims

1. A stamped and/or printed edge strip of plastic, which contains pigments and/or fillers, is a polyolefin layer or polyolefin foil or is a layer or foil containing polyolefin, and contains a propylene homo- and/or -copolymeride and/or a high density ethylene (HDPE) or consists thereof and has at least one adhesive agent layer (11) arranged immediately therebeneath or over one or more intermediate layers, characterised in that at least one polyolefin layer or polyolefin foil as intermediate layer or upper layer (12,12') contains or insists of a mixture or alloy of a propylene homo- or -copolymeride and a HDPE and/or LLDPE with a weight ratio of the propylene homo- or- copolymeride (with a comonomer component of less than 50 % by weight) to the HDPE and/or LLDPE of
40 : 60 to 60 : 40
and at least one stabiliser, lubricant, pigment and/or dye, that a non self-adhesive, solvent-free coextruded adhesive foil is arranged on the underside of the edge strip, which foil contains or consists of a plastic, containing polar groups, which is insoluble in water or difficultly soluble in water, in the form of a co-, ter- and/orgraft polymeride or of an alloy or mixture, that the edge strip consists of the at least two-layered plastic web, free of paper layer, or of the at least two-layered endless panel, free of paper layer, and has a material thickness of
400 to 4000 µm
and is cut in strips of
12 to 200 mm.

2. An edge strip according to Claim 1, characterised in that above the intermediate layer or intermediate foil (12') a polyolefin layer or -foil (13), containing filler, is arranged, which contains a mixture or alloy of 30 to 70 % by weight, preferably 40 to 60 % by weight ethylene homo- and/or -copolymeride (with a comonomer component below 15 %by weight in relation to 100 parts by weight ethylene copolymeride) and 70 to 30 % by weight, preferably 60 to 40 % by weight propylene homo- and/or -copolymeride (with a comonomer component) or the plastic binding agent consists thereof.

3. An edge strip according to Claims 1 and 2, characterised in that the coextruded adhesive foil as plastic containing polar groups contains or consists of at least one ethylene vinyl acetate -co- and/or -terpolymeride, an ethylene acrylic acid ester- or ethylene acrylic acid -co- or -terpolymeride, and ethylene methacrylic acid ester- or ethylene methacrylic acid -co- or -terpolymeride, a polymeride, -co- or -terpolymeride containing maleic acid or maleic acid anhydride and/or a polymeride, co- or terpolymeride containing paratoluene sulphonic acid or sulphonic acid groups.

4. An edge strip according to one or more of Claims 1 to 3, characterised in that above the intermediate layer or intermediate foil (12'), which contains or consists of propylene homo- or -copolymeride (with a comonomer component below 15 % by weight) and HDPE or LLDPE as binding agent, a further polyolefin layer or -foil (13) is arranged, which consists of a mixture of
70 to 97.5 parts by weight, preferably
75 to 85.0 parts by weight,
of a propylene homo- or -copolymeride,
5 to 30 parts by weight, preferably
15 to 25 parts by weight,
HPDE, which in relation to 100 parts by weight HDPE is replaced by
0 to 35 % by weight, preferably
0 to 10 % by weight,
in relation to 100 parts by weight used HDPE by polyvinvyl alchocol, ethylene vinyl alcohol mixed polymeride, ethylene acrylic acid mixed polymeride, acrylic acid ester acrylic acid terpolymeride and/or polycaprolactone and
50 to 150 % by weight, preferably
70 to 120 % by weight
in relation to 100 parts by weight plastic binding agent of a fine-particulate filler, or contains these components, and also if applicable, processing agents, coloured pigments and/or modifiers.

5. An edge strip according to one or more of Claims 1 to 4, characterised in that more than 60 % by weight, preferably more than 75 % by weight of the filler used in the polyolefin layer or -foil (13) and/or in the intermediate layer or intermediate foil (12') or upper layer (12) is treated and/or coated on the surface with a surface treatment agent and/or with a reactive substance in a weight quantity of 0.05 to 10 % by weight (in relation to 100 parts by weight filler), preferably 0.5 to 6 % by weight (in relation to 100 parts by weight filler), and that the mean grain diameter of the filler or filler mixture amounts to 0.01 to 30 µm, preferably 0.1 to 10 µm.

6. An edge strip according to one or more of Claims 1 to 5, characterised in that above the intermediate layer or intermediate foil (12'), which contains or consists of propylene homo- or -copolymeride (with a comonomer component below 15 % by weight) and HDPE or LLDPE as binding agent, a further polyolefin layer or -foil (13) is arranged, which contains or consists of polypropylene and/or polyethylene, preferably HDPE, as plastic and also contains or consists of 0.5 to 55 % by weight, preferably 3 to 35 % by weight, of an organic filler or filler mixture, preferably cellulose with a mean particle diameter of 5 to 100 µm preferably 7 to 50 µm, and with a maximum mean length up to 250 µm, preferably up to 200 µm, and/or thickness (in relation to the sum of polyolefin and organic filler) and also if applicable processing adjuvants, coloured pigments, dyes and/or modifiers.

7. An edge strip according to one or more of Claims 1 to 6, characterised in that above the intermediate foil or intermediate layer (12 or 12') and/or above the polyolefin layer or -foil (13), containing filler, immediately or over at least one adhesive layer or adhesive foil (14,14') and or at least one printed layer or colour-printed layer (15) a lacquer layer (16) or a protective layer or protective foil (17) is arranged.

8. An edge strip according to one or more of Claims 1 to 7, characterised in that the single- or multi-layered protective layer (17) containing polymethyl methacrylate, polyamide and/or polyester and preferably containing UV stabilisers and/or UV absorbers, is a layer or foil obtained by extrusion, coextrusion or by the application of a coating and/or additionally contains a fluoropolymeride, an acrylate and/or polyacrylate and/or an organic chemical compound flexibilising the protective layer or protective foil, or a flexibilising polymeride.

9. An edge strip according to one or more of Claims 1 to 8, characterised in that the extruded, coextruded or multi-layered protective layer or protective foil (17) has a thickness of 20 to 350 µm, preferably 30 to 250 µm, has a UV absorber content and/or UV stabiliser content of 0.02 to 15 % by weight, preferably 0.2 to 5 % by weight (in relation to 100 parts by weight polymer of the protective layer) and/or contains or consists of at least one flexibilising acrylate or polyacrylate and/or polyvinylidene fluoride.

10. An edge strip according to one or more of Claims 1 to 9, characterised in that the single- or multi-layered lacquer layer (16), containing polyacrylate, polymethylmethacrylate, polyamide and/or polyester and preferably containing UV stabilisers and/or UV absorbers, or the protective layer, is a layer or foil obtained by the application of a coating, which is preferably applied with the additional use of at least one organic chemical solvent in a layer thickness of 5 to 80 µm, preferably 8 to 40 µm.

11. An edge strip according to one or more of Claims 1 to 10, characterised in that the coextruded or multi-layered lacquer layer, protective layer or protective foil has at least one lower layer or foil containing polymethylmethacrylate, which preferably contains at least one flexibilising acrylate or polyacrylate and has at least one upper layer or upper foil containing polyvinylidene fluoride.

12. An edge strip according to one or more of Claims 1 to 11, characterised in that beneath the transparent lacquer layer or transparent protective foil or protective layer, a transparent adhesive foil or adhesive layer is arranged, which contains or consists of an alloy or mixture and/or a co-, ter- or graft polymeride of an olefin or polyolefin, preferably polyethylene and/or polypropylene with an acrylic ester, preferably methyl-, ethylene- butyl- acrylic ester, and/or maleic acid anhydride and/or with an acrylate homo-, -co- and/or -terpolymeride and/or a methacrylate homo-, -co- and/or -ter polymeride.

13. An edge strip according to one or more of Claims 1 to 12, characterised in that beneath the lacquer layer (16), protective foil or protective layer (17), which preferably has a smooth surface, a transparent adhesive layer (14) is arranged, which is applied onto the underside of the upper foil or upper layer preferably with the use of at least one solvent or thinning agent (with subsequent volatilization, evaporation or removal of the solvent or thinning agent or of a considerable proportion thereof), which contains or consists of a thermoplastic acrylate homo-, -co- and/or -terpolymeride, preferably in combination with a polyisocyanate, and/or an acrylate able to be cross-linked and containing OH groups, preferably in combination with a polyisocyanate, and/or methacrylate homo-, -co- and/or -terpolymeride and/or a polyisocyanate, preferably hexamethylene diisocyanate, and/or an alloy or mixture of one or more of these compounds with each other.

14. A method for the production of an edge strip of plastic, which contains fillers and/or pigments, is printed and/or punched and contains at least one layer or foil, which is a polyolefin layer or polyolefin foil or a layer of foil containing polyolefin and contains or consists of a polypropylene homo- and/or -copolymeride and/or a high density ethylene (HDPE) and has at least one adhesive agent layer arranged immediately therebeneath or over one or more intermediate layers, characterised in that at least one polyolefin layer or polyolefin foil is used as intermediate layer or upper layer (12,12'), which contains or consists of a mixture or alloy of a propylene homo- or -copolymeride and a HDPE and/or LLDPE with a weight ratio of the propylene homo- or -copolymeride (with a comonomer component of less than 50 % by weight) to the HDPE and/or LLDPE of
40 : 60 to 60 : 40
and also a stabiliser and/or lubricant and/or at least one pigment, dye, that a non-adhesive solvent-free coextruded adhesive foil is used and is arranged on the underside of the edge strip, which contains or consists of a plastic, containing polar groups, which is difficultly soluble in water or insoluble in water, in the form of a co-, ter- and/or graft polymeride or an alloy or mixture, that the coextruded or multiply extruded composite layer (11,12) and if applicable one or more further layers is directed through at least a first pair of rollers, preferably calender rollers, stamping rollers and/or calender and stamping rollers, in which the pair of rollers has a temperature of 10 to 50 °C, preferably 15 to 35 °C, the roll gap, the foil material and the thickness of the foil or composite foil web is adjusted such that only a knead is formed on the side lying opposite the adhesive layer or adhesive foil and the foil, immediately before the further cooling or after the cooling or after the further processing, which takes place by extruding on, lining or laminating with at least one further plastic foil, with a material thickness of 400 to 4000 µm is cut, sawn or milled into strips 12 to 200 mm, preferably 15 to 100 mm wide.

15. A method according to Claim 14, characterised in that as plastic for the coextruded adhesive foil at least one ethylene vinyl acetate co- and/or -terpolymeride, an ethylene acrylic acid ester- or ethylene acrylic acid-co- or -terpolymeride, an ethylene methacrylic acid ester- or ethylene methacrylic acid co- or -terpolymeride, a polymeride, -co- or -terpolymeride containing maleic acid or maleic acid anhydride and/or a polymeride, co- or terpolymeride containing paratoluene sulphonic acid or sulphonic acid groups is used.

16. A method according to Claims 14 and 15, characterised in that the coextruded or multiply extruded composite layer (11, 12) and also if applicable one or more further layers emerging from a broad slit extruder nozzle is brought onto a chill roll or casting cooling roller and is cooled or within the first third of the chill roll- or casting cooling roll circumference, preferably within the first quarter thereof (calculated starting from the site of the chill roll roller where the melt emerges), is further processed, preferably by extruding on, lining or laminating, connected with at least one further plastic foil or -foil web, preferably at a temperature of 40 to 110°C, or after or without this further processing, is cut, sawn or milled in strips 12 to 200 mm, preferably 15 to 100 mm wide.

17. A method for the coating of wood- or wood material edges of Claims 1 to 16, characterised in that onto the wood- or wood material edges which are to be coated, for the production of furniture or furniture parts, a fusion adhesive is applied at temperatures of 120 to 245 °C, preferably 140 to 220 °C, and the edge strip, which is cut, milled, sawn or divided in a similar manner into strips to a strip width of 12 to 200 mm, preferably 15 to 100 mm, and which contains at least the layers (11) and (12), is applied at an edge strip temperature below 80 °C, preferably below 35°C, onto the hot fusion adhesive layer of the wood- or wood material edge under pressure, preferably with roll or roller pressure, and the rims, projecting over the edges, on the edges, corners or similar terminal rims are cut off, milled off, sawn off or separated in a similar manner.

18. A method for the coating of wood- or wood material edges using an edge strip according to one or more of Claims 1 to 17, characterised in that onto the wood- or wood material edges to be coated, for the production of furniture or furniture parts, an edge strip is applied which has been precoated with a fusion adhesive, in which the edge strip which has been cut, milled, sawn or divided in a similar manner into strips to a strip width of 12 to 200 mm, preferably 15 to 100 mm, which contains at least the layers (11) and (12) and the fusion adhesive layer of the strip is activated by heat by heating to temperatures over 80 °C, preferably to 100 to 245 °C and with the hot fusion adhesive layer is applied onto the wood- or wood material edge under pressure, preferably under roll or roller pressure, and the rims, projecting over the edges, on the edges, corners or similar terminal rims, are cut off, milled off, sawn off or separated in a similar manner.

19. The use of the edge strip according to one or more of Claims 1 to 13 for the coating of wood- or wood material edges for the production of furniture or furniture parts, with the additional use of a fusion adhesive, preferably of a fusion adhesive containing ethylene vinyl acetate, ethylene acrylic acid and/or an ethylene acrylic acid ester in the form of polymerides, co- or terpolymerides, graft or block polymerides or of a fusion adhesive based on polyamide or polyurethane.

## Revendications

1. Bande de lisière estampée et/ou imprimée en matière synthétique, qui contient des pigments et/ou des matières de charge, qui est une couche de polyoléfines ou un film de polyoléfines ou une couche ou un film contenant des polyoléfines et qui contient ou est constituée d'un homopolymère et/ou d'un copolymère de propylène et/ou d'un éthylène de haute densité (HDPE) et qui possède au moins une couche d'agent adhérent (11) disposée immédiatement en dessous ou par l'entremise d'une ou de plusieurs couches intermédiaires, caractérisée en ce qu'au moins une couche de polyoléfines ou un film de polyoléfines contient ou est constitué(e) à titre de couche intermédiaire ou de couche supérieure (12, 12') d'un mélange ou d'un alliage d'un homopolymère ou d'un copolymère de propylène et d'un HDPE et/ou d'un LLDPE avec un rapport pondéral de l'homopolymère ou copolymère de propylène (avec une teneur en comonomères inférieure à 50 % en poids) au HDPE et/ou au LLDPE de
40 : 60 à 60 : 40,
de même que d'au moins un stabilisateur, agent lubrifiant, pigment et/ou colorant, en ce qu'un film d'adhérence co-extrudé, exempt de solvant et non-autocollant est disposé à la face inférieure de la bande de lisière, qui contient ou est constituée d'une matière synthétique, difficilement soluble ou insoluble dans l'eau, contenant des groupes polaires, sous forme d'un copolymère, terpolymère et/ou polymère greffé ou d'un alliage ou d'un mélange, en ce que la bande de lisière est constituée de la bande de matière synthétique à au moins deux couches, exempte de couches de papier, ou de la plaque sans fin à au moins deux couches, exempte de couches de papier, et présente une épaisseur de matériau de
400 à 4.000 µm
et est découpée en bandes de
12 à 200 mm.

2. Bande de lisière selon la revendication 1, caractérisée en ce que au-dessus de la couche intermédiaire ou du film intermédiaire (12'), est disposé(e) une couche ou un film de polyoléfines (13) contenant des matières de charge, qui contient un mélange ou un alliage de 30 à 70% en poids, de préférence de 40 à 60% en poids d'homopolymère et/ou de copolymère d'éthylène (avec une teneur en comonomères inférieure à 15 % en poids par rapport à 100 parts en poids de copolymère d'éthylène) et de 70 à 30 % en poids, de préférence de 60 à 40 % en poids, d'homopolymère et/ou de copolymère de propylène (avec une teneur en comonomères) ou que l'agent liant en matière synthétique en est constitué.

3. Bande de lisière selon les revendications 1 et 2, caractérisée en ce que le film d'adhérence co-extrudé contient ou est constitué, à titre de matière synthétique contenant des groupes polaires, d'au moins un copolymère et/ou terpolymère d'éthylène et d'acétate de vinyle, un copolymère ou terpolymère d'éthylène et d'ester d'acide acrylique ou d'éthylène et d'acide acrylique, un copolymère ou terpolymère d'éthylène et d'ester d'acide méthacrylique ou d'éthylène et d'acide méthacrylique, un polymère, copolymère ou terpolymère contenant de l'acide maléique ou de l'anhydride d'acide maléique et/ou un polymère, copolymère ou terpolymère contenant un acide para-toluènesulfonique ou des groupes d'acide sulfonique.

4. Bande de lisière selon une ou plusieurs des revendications 1 à 3, caractérisée en ce que au-dessus de la couche intermédiaire ou du film intermédiaire (12'), qui contient ou est constitué(e) d'un homopolymère ou copolymère de propylène (avec une teneur en comonomères inférieure à 15 % en poids) et de HDPE ou de LLDPE à titre d'agent liant, est disposé(e) une couche ou un film de polyoléfines (13) supplémentaire qui est constitué(e) d'un mélange de
70 à 97,5 parts en poids, de préférence
75 à 85,0 parts en poids,
d'un homopolymère ou d'un copolymère de propylène,
5 à 30 parts en poids, de préférence
15 à 25 parts en poids,
de HDPE, qui est remplacé par rapport à 100 parts en poids de HDPE par
0 à 35 % en poids, de préférence
0 à 10 % en poids,
par rapport à 100 parts en poids de HDPE utilisé, par de l'alcool polyvinylique, par un copolymère d'éthylène et d'alcool vinylique, par un copolymère d'éthylène et d'acide acrylique, par un terpolymère d'ester d'acide acrylique et d'acide acrylique et/ou par de la polycaprolactone, et
50 à 150 % en poids, de préférence
70 à 120 % en poids,
par rapport à 100 parts en poids d'agent liant de matière synthétique, d'une matière de charge à fines particules, ou qui contient ces contituants, de même qu'éventuellement des adjuvants de mise en oeuvre, des pigments colorés et/ou des agents de modification.

5. Bande de lisière selon une ou plusieurs des revendications 1 à 4, caractérisée en ce que plus de 60 % en poids, de préférence plus de 75 % en poids de la matière de charge utilisée dans la couche ou le film de polyoléfines (13) et/ou dans la couche intermédiaire ou dans le film intermédiaire (12') ou dans la couche supérieure (12) sont traités et/ou revêtus en surface avec un agent de traitement superficiel et/ou une substance réactionnelle en une quantité pondérale de 0,05 à 10 % en poids (par rapport à 100 parts en poids de matière de charge), de préférence de 0,5 à 6 % en poids (par rapport à 100 parts en poids de matière de charge) et en ce que la granulométrie moyenne de la matière de charge ou du mélange de matières de charge s'élève à 0,01 à 30 µm, de préférence à 0,1 à 10 µm.

6. Bande de lisière selon une ou plusieurs des revendications 1 à 5, caractérisée en ce que au-dessus de la couche intermédiaire ou du film intermédiaire (12'), qui contient ou est constitué(e) d'un homopolymère ou copolymère de propylène (avec une teneur en comonomères inférieure à 15 % en poids) et de HDPE ou de LLDPE à titre d'agent liant, est disposé(e) une couche ou un film de polyoléfines (13) supplémentaire qui contient ou est constitué(e) de polypropylène et/ou de polyéthylène, de préférence de HDPE, à titre de matière synthétique, et qui contient ou est constitué(e) de 0,5 à 55 % en poids, de préférence de 3 à 35 % en poids d'une matière de charge ou d'un mélange de matières de charge organiques, de préférence de la cellulose avec un diamètre moyen des particules de 5 à 100 µm, de préférence de 7 à 50 µm et une longueur moyenne maximale jusqu'à 250 µm, de préférence jusqu'à 200 µm, et/ou de l'amidon (par rapport à la somme des polyoléfines et de la matière de charge organique) de même qu'éventuellement des adjuvants de mise en oeuvre, des pigments colorés, des colorants et/ou des agents de modification.

7. Bande de lisière selon une ou plusieurs des revendications 1 à 6, caractérisée en ce que au-dessus du film intermédiaire ou de la couche intermédiaire (12 ou 12') et/ou au-dessus de la couche ou du film de polyoléfines (13) contenant des matières de charge, est disposé(e) immédiatement ou par l'entremise d'au moins une couche d'adhérence ou d'un film d'adhérence (14, 14') et/ou d'au moins une couche d'impression ou d'une couche d'impression en couleur (15), une couche de laque (16) ou une couche de protection ou un film de protection (17).

8. Bande de lisière selon une ou plusieurs des revendications 1 à 7, caractérisée en ce que la couche de protection (17) à une ou à plusieurs couches, contenant du méthacrylate de polyméthyle, du polyamide et/ou du polyester contenant de préférence des stabilisateurs UV et/ou des absorbeurs d'UV est une couche ou un film obtenu par extrusion, co-extrusion ou par application de revêtement et/ou elle contient en outre un polymère fluoré, un acrylate et/ou un polyacrylate et/ou un composé organique de flexibilisation de la couche de protection ou du film de protection ou un polymère de flexibilisation.

9. Bande de lisière selon une ou plusieurs des revendications 1 à 8, caractérisée en ce que la couche de protection ou le film de protection (17) extrudé(e), co-extrudé(e) ou à plusieurs couches présente une épaisseur de 20 à 350 µm, de préférence de 30 à 250 µm, présente une teneur en absorbeurs d'UV et/ou une teneur en stabilisateurs UV de 0,02 à 15 % en poids, de préférence de 0,2 à 5 % en poids (par rapport à 100 parts en poids de polymère de la couche de protection), et/ou contient ou est constitué(e) d'au moins un acrylate ou polyacrylate de flexibilisation et/ou de fluorure de polyvinylidène.

10. Bande de lisière selon une ou plusieurs des revendications 1 à 9, caractérisée en ce que la couche de laque (16) à une ou à plusieurs couches, contenant du polyacrylate, du méthacrylate de polyméthyle, du polyamide et/ou du polyester contenant de préférence des stabilisateurs UV et/ou des absorbeurs d'UV, ou la couche de protection est une couche ou un film obtenu(e) par application d'un revêtement, qui est ou sera de préférence appliqué(e) en utilisant conjointement au moins un solvant organique en une épaisseur de couche de 5 à 80 µm, de préférence de 8 à 40 µm.

11. Bande de lisière selon une ou plusieurs des revendications 1 à 10, caractérisée en ce que la couche de laque, la couche de protection ou le film de protection co-extrudé(e) ou à plusieurs couches possède au moins une couche ou un film contenant du méthacrylate de polyméthyle, qui contient de préférence au moins un acrylate ou polyacrylate de flexibilisation et présente au moins une couche supérieure ou un film supérieur contenant du fluorure de polyvinylidène.

12. Bande de lisière selon une ou plusieurs des revendications 1 à 11, caractérisée en ce que en dessous de la couche de laque transparente ou du film de protection transparent ou de la couche de protection transparente, est disposé(e) un film d'adhérence transparent ou une couche d'adhérence transparente qui contient ou est constitué(e) d'un alliage ou d'un mélange et/ou d'un copolymère, terpolymère ou polymère greffé d'une oléfine, respectivement d'une polyoléfine, de préférence de polyéthylène et/ou de polypropylène avec un ester acrylique, de préférence l'ester méthyl-, éthylène-, butyl-acrylique, et/ou l'anhydride d'acide maléique et/ou avec un homopolymère, copolymère et/ou terpolymère d'acrylate et/ou un homopolymère, copolymère et/ou terpolymère de méthacrylate.

13. Bande de lisière selon une ou plusieurs des revendications 1 à 12, caractérisée en ce que en dessous de la couche de laque (16), du film de protection ou de la couche de protection (17) présentant de préférence une surface lisse, est disposée une couche d'adhérence (14) transparente, qui est appliquée de préférence en utilisant au moins un solvant ou diluant sur la face inférieure du film supérieur ou de la couche supérieure (par évaporation, réduction ou élimination subséquente du solvant ou du diluant ou d'une fraction substantielle de celui-ci), qui contient ou est constituée d'un homopolymère, copolymère et/ou terpolymère d'acrylate thermoplastique, de préférence en combinaison avec un polyisocyanate, et/ou d'un acrylate réticulable contenant des groupes OH, de préférence en combinaison avec un polyisocyanate, et/ou d'un homopolymère, copolymère et/ou terpolymère de méthacrylate et/ou d'un polyisocyanate, de préférence le diisocyanate d'hexaméthylène, et/ou d'un alliage ou d'un mélange mutuel d'un ou de plusieurs de ces composés.

14. Procédé de fabrication d'une bande de lisière en matière synthétique, qui contient des matières de charge et/ou des pigments, qui est imprimée et/ou estampée et qui contient au moins une couche ou un film, qui est une couche de polyoléfines ou un film de polyoléfines ou une couche ou un film contenant des polyoléfines et contient ou est constitué(e) d'un homopolymère et/ou copolymère de propylène et/ou d'un éthylène de haute densité (HDPE) et qui présente au moins une couche d'agent adhérent disposée immédiatement en dessous ou par l'entremise d'une ou de plusieurs couches intermédiaires, caractérisé en ce qu'on utilise au moins une couche de polyoléfines ou un film de polyoléfines à titre de couche intermédiaire ou de couche supérieure (12, 12'), qui contient ou est constitué(e) d'un mélange ou d'un alliage d'un homopolymère ou copolymère de propylène et d'un HDPE et/ou d'un LLDPE avec un rapport pondéral de l'homopolymère ou copolymère de propylène (avec une teneur en comonomères inférieure à 50 % en poids) au HDPE et/ou au LLDPE de
40 : 60 à 60 : 40,
de même qu'au moins un stabilisateur et/ou agent lubrifiant et/ou au moins un pigment, colorant, en ce qu'on utilise un film d'adhérence co-extrudé exempt de solvant, non-autocollant, et celui-ci est disposé à la face inférieure de la bande de lisière qui contient ou est constituée d'une matière synthétique difficilement soluble ou insoluble dans l'eau, contenant des groupes polaires, sous forme d'un copolymère, terpolymère et/ou polymère greffé ou d'un alliage ou d'un mélange, en ce que la couche composite co-extrudée ou extrudée en plusieurs fois (11, 12) de même qu'éventuellement une ou plusieurs couches supplémentaires est passée par au moins une première paire de rouleaux, de préférence des rouleaux de lisseuse, des rouleaux d'estampage et/ou des rouleaux de lisseuse et d'estampage, la paire de rouleaux présentant une température de 10 à 50 °C, de préférence de 15 à 35 °C, la fente entre les rouleaux, le matériau du film et l'épaisseur du film respectivement de la bande de film composite étant réglés de telle manière qu'il ne se forme qu'une masse pétrie sur la face opposée à la couche d'adhérence ou au film d'adhérence et que le film est découpé, scié ou taillé immédiatement avant le refroidissement supplémentaire ou après le refroidissement ou après le traitement ultérieur qui est effectué par application par extrusion, par contre-placage ou par laminage d'au moins un film en matière synthétique supplémentaire, à une épaisseur de matériau de 400 à 4.000 µm, en bandes d'une largeur de 12 à 200 mm, de préférence de 15 à 100 mm.

15. Procédé selon la revendication 14, caractérisé en ce qu'on utilise à titre de matière synthétique pour le film d'adhérence co-extrudé, au moins un copolymère et/ou terpolymère d'éthylène et d'acétate de vinyle, un copolymère ou terpolymère d'éthylène et d'ester d'acide acrylique ou d'éthylène et d'acide acrylique, un copolymère ou terpolymère d'éthylène et d'ester d'acide méthacrylique ou d'éthylène et d'acide méthacrylique, un polymère, copolymère ou terpolymère contenant de l'acide maléique ou de l'anhydride d'acide maléique et/ou un polymère, copolymère ou terpolymère contenant un acide paratoluènesulfonique ou des groupes d'acide sulfonique.

16. Procédé selon les revendications 14 et 15, caractérisé en ce que la couche composite (11, 12) co-extrudée ou extrudée en plusieurs fois, de même qu'éventuellement une ou plusieurs couches supplémentaires sont portée(s) et refroidie(s) sur un laminoir à rouleaux de refroidissement ou à refroidissement de coulée en sortant d'une buse d'extrudeuse à fente large ou traitée(s) à l'intérieur du premier tiers de la circonférence du rouleau à refroidissement ou à refroidissement de coulée, de préférence à l'intérieur du premier quart de celle-ci (calculée à partir de l'endroit du rouleau à refroidissement où la matière en fusion est évacuée), de préférence par application par extrusion, par contre-placage ou par laminage, reliée(s) avec au moins un film ou une bande de film en matière synthétique supplémentaire, de préférence à une température de 40 à 110 °C, ou découpée(s), sciée(s) ou taillée(s) après ou sans ce traitement ultérieur en bandes d'une largeur de 12 à 200 mm, de préférence de 15 à 100 mm.

17. Procédé de revêtement de chants de bois ou de matériaux dérivés du bois selon les revendications 1 à 16, caractérisé en ce que sur les chants de bois ou de matériaux dérivés du bois à revêtir pour la fabrication de meubles ou d'éléments de meubles, on applique une colle thermofusible à des températures de 120 à 245 °C, de préférence de 140 à 220 °C, et la bande de lisière découpée, taillée, sciée en bandes ou divisée d'une manière semblable en une largeur de bandes de 12 à 200 mm, de préférence de 15 à 100 mm, qui contient au moins les couches (11) et (12), est appliquée à une température de la bande de lisière inférieure à 80 °C, de préférence inférieure à 35 °C, sur la couche de colle thermofusible chaude du chant de bois ou de matériaux dérivés du bois, sous pression, de préférence sous la pression de rouleaux ou de tambours et les bords dépassant le chant sont découpés, taillés, sciés ou sectionnés d'une manière semblable sur les chants, les coins ou les arêtes semblables.

18. Procédé de revêtement de chants de bois ou de matériaux dérivés du bois en utilisant une bande de lisière selon une ou plusieurs des revendications 1 à 17, caractérisé en ce qu'on applique sur les chants de bois ou de matériaux dérivés du bois à revêtir pour la fabrication de meubles ou d'éléments de meubles, une bande de lisière prérevêtue d'une colle thermofusible, où la bande de lisière découpée, taillée, sciée en bandes ou divisée d'une manière semblable en une largeur de bandes de 12 à 200 mm, de préférence de 15 à 100 mm, qui contient au moins les couches (11) et (12), et la couche de colle thermofusible de la bande est activée thermiquement par échauffement à des températures supérieures à 80 °C, de préférence à 100 à 245 °C et appliquée avec la couche de colle thermofusible chaude sur le chant de bois ou de matériaux dérivés du bois, sous pression, de préférence sous la pression de rouleaux ou de tambours, et les bords dépassant le chant sont découpés, taillés, sciés ou sectionnés d'une manière semblable sur les chants, les coins ou les arêtes semblables.

19. Utilisation de la bande de lisière selon une ou plusieurs des revendications 1 à 13, pour le revêtement de chants de bois ou de matériaux dérivés du bois pour la fabrication de meubles ou d'éléments de meubles en utilisant conjointement une colle thermofusible, de préférence une colle thermofusible contenant un éthylène - acétate de vinyle, un éthylène - acide acrylique et/ou un éthylène - ester d'acide acrylique sous forme de polymères, copolymères ou terpolymères de polymères greffés ou de polymères séquencés, ou une colle thermofusible à base de polyamide ou de polyuréthanne.
